(19) Europäisches Patentamt
European Patent Office
Office européen des brevets

(11) **EP 2 227 713 B1**

(12) **EUROPÄISCHE PATENTSCHRIFT**

(45) Veröffentlichungstag und Bekanntmachung des Hinweises auf die Patenterteilung:
**25.05.2016 Patentblatt 2016/21**

(21) Anmeldenummer: **08867065.8**

(22) Anmeldetag: **22.12.2008**

(51) Int Cl.:
**G02C 7/02** (2006.01)

(86) Internationale Anmeldenummer:
**PCT/EP2008/011023**

(87) Internationale Veröffentlichungsnummer:
**WO 2009/083218 (09.07.2009 Gazette 2009/28)**

(54) **VERFAHREN ZUR BERECHNUNG UND OPTIMIERUNG EINES BRILLENGLASPAARES UNTER BERÜCKSICHTIGUNG BINOKULARER EIGENSCHAFTEN**

METHOD FOR CALCULATING AND OPTIMIZING A PAIR OF EYEGLASSES IN CONSIDERATION OF BINOCULAR PROPERTIES

PROCÉDÉ DE CALCUL ET D'OPTIMISATION D'UNE PAIRE DE VERRES DE LUNETTES EN TENANT COMPTE DE PROPRIÉTÉS BINOCULAIRES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.12.2007 DE 102007062929**

(43) Veröffentlichungstag der Anmeldung:
**15.09.2010 Patentblatt 2010/37**

(73) Patentinhaber: **Rodenstock GmbH**
**80687 München (DE)**

(72) Erfinder:
• **BECKEN, Wolfgang**
**82061 Neuried (DE)**

• **ESSER, Gregor**
**80686 München (DE)**
• **ALTHEIMER, Helmut**
**87650 Baisweil-Lauchdorf (DE)**
• **UTTENWEILER, Dietmar**
**82057 Icking (DE)**

(74) Vertreter: **Müller-Boré & Partner**
**Patentanwälte PartG mbB**
**Friedenheimer Brücke 21**
**80639 München (DE)**

(56) Entgegenhaltungen:
WO-A-01/84213          WO-A-2004/086125
WO-A1-2008/000397      DE-A1-102005 057 533

EP 2 227 713 B1

**Beschreibung**

Die Erfindung betrifft ein Verfahren zur Optimierung und Herstellung von Brillengläsern für Brillenglaspaare mit einer verbesserten binokularen Verträglichkeit für einen Brillenträger. Ferner bezieht sich die Erfindung auf ein Computerprogrammerzeugnis, ein Speichermedium und eine Vorrichtung zur Herstellung zumindest einen Brillenglases.

Für die Herstellung bzw. Optimierung von Brillengläsern, insbesondere von individuellen Brillengläsern wird jedes Brillenglas so gefertigt, dass für jede gewünschte Blickrichtung oder jeden gewünschten Objektpunkt eine möglichst gute Korrektur eines Refraktionsfehlers des jeweiligen Auges des Brillenträgers erreicht wird. Eine vollständige Korrektur für alle Blickrichtungen gleichzeitig ist aber im Normalfall nicht möglich. Daher werden die Brillengläser derart gefertigt, dass sie vor allem in den hauptsächlichen Nutzungsbereichen, insbesondere in zentralen Durchblickbereichen eine gute Korrektur von Fehlsichtigkeiten des Auges und nur geringe Abbildungsfehler bewirken, während in peripheren Bereichen größere Abbildungsfehler zugelassen werden. Diese Abbildungsfehler hängen von Art und Umfang der erforderlichen Korrekturen sowie von der Position auf dem Brillenglas, also dem jeweiligen Durchblickpunkt ab. Beim Blicken durch eine Brille führt das Augenpaar ständig Blickbewegungen aus, wodurch sich die Durchblickpunkte innerhalb des Brillenglases verändern. Damit ergeben sich bei Blickbewegungen ständig Veränderungen der Abbildungseigenschaften, insbesondere der Abbildungsfehler für jedes Brillenglas einer Brille, was zu einer schlechter empfundenen Qualität des Sehens und eventuell zu Unverträglichkeit einer Brille führen kann. Bei einer vorgegebenen Gebrauchsstellung der Brille für einen Brillenträger, d.h. bei vorgegebener Position der Brillengläser vor den Augen des Brillenträgers und einem vorgegebenen Objektabstand, ergibt sich für viele Objektpunkte ein korrespondierendes Paar von Durchblickpunkten durch das rechte bzw. linke Brillenglas, welche im allgemeinen nicht symmetrisch angeordnet sind und sich bei Blickbewegungen in Abhängigkeit von der Objektposition in den einzelnen Brillengläsern meist unterschiedlich verändern. Dadurch ergeben sich auch unterschiedliche Veränderungen der Abbildungsfehler des rechten und linken Auges, was wiederum den Seheindruck und eventuell sogar die Verträglichkeit einer Brille beeinträchtigt. Insbesondere bei Brillengläsern mit unterschiedlicher Verordnung für das rechte und linke Auge führt die unterschiedliche Veränderung von Abbildungsfehlern des rechten und linken Auges bei Blickbewegung, aber auch ein konstanter Unterschied der optischen Eigenschaften bei geradem oder seitlichem Durchblick oft zu einem schlechten binokularen Seheindruck.

DE 10 2005 057 533 A1 beschreibt ein Verfahren zum Berechnen der Vergrößerung und/oder Verzerrung sowie ein Verfahren zum Herstellen eines Brillenglases mit geringer Vergrößerung und/oder Verzerrung. Dazu wird zunächst zumindest eine Fläche eines Brillenglases durch Minimierung einer Zielfunktion optimiert, in welcher für eine Vielzahl von Bewertungsstellen jeweils die momentane Abweichung der Vergrößerung und der Verzerrung des zu optimierenden Brillenglases von entsprechenden Sollwerten berücksichtigt werden. Diese Optimierung erfolgt für jedes Brillenglas eigens.

WO 2004/086125 A1 beschreibt ein Verfahren zum individuellen Optimieren eines Gleitsichtglases. Dabei wird wiederum eine Zielfunktion minimiert, in welche optische Eigenschaften wie Astigmatismus und Brechwert des zu optimierenden Brillenglases einfließen. Außerdem wird erwähnt, dass es vorteilhaft sein könnte, bei der Optimierung auch binokulare Imbalanzen zu berücksichtigen.

WO 01/84213 A2 beschreibt die Zielsetzung, ein progressives Brillenglas mit geringer Änderung der binokularen Eigenschaften bei einer Blickbewegung bereitzustellen. Insbesondere wird darin vorgeschlagen, dass zur Minimierung der Änderung des binokularen Abbildungseigenschaften bei horizontaler Blickbewegung ein Brillenglas angestrebt werden könnte, bei dem der Hub (Differenz zwischen dem maximalen und minimalen bei der Bewegung vorkommenden Wert) von binokularen Abbildungseigenschaften bei der Verfolgung eines bewegten Objektes unterhalb einer physiologisch vorgegebenen Grenze liegt.

Es ist somit Aufgabe der vorliegenden Erfindung die für einen Brillenträger wahrgenommene optische Qualität und die Verträglichkeit einer Brille, insbesondere mit unterschiedlichen Verordnungen für das rechte und linke Brillenglas zu verbessern.

Diese Aufgabe wird durch ein Verfahren zur Herstellung zumindest eines Brillenglases mit den Merkmalen des Anspruchs 1, ein Computerprogrammerzeugnis mit den Merkmalen des Anspruchs 12, ein Speichermedium mit den Merkmalen des Anspruchs 13 und eine Vorrichtung zur Herstellung eines Brillenglases mit den Merkmalen des Anspruchs 14 gelöst.

Somit stellt die vorliegende Erfindung ein computerimplementiertes Verfahren zur Optimierung und Herstellung zumindest eines ersten Brillenglases für ein Paar von Brillengläsern zur Benutzung zusammen mit einem zweiten Brillenglas des Paares von Brillengläsern in einer Brille für eine bestimmte Gebrauchssituation bereit, umfassend einen binokularen Berechnungs- bzw. Optimierungsschritt zumindest einer Fläche des ersten Brillenglases derart, dass eine Zielfunktion

$$F = g^{(1)} F_{\text{mono}}^{(1)} + g^{\text{bino}} F_{\text{bino}} + \tilde{F}$$

minimiert wird, welche als Summe aus zumindest einer ersten monokularen Funktion $F_{mono}^{(1)}$ und einer binokularen Funktion $F_{bino}$ mit jeweiligen Gewichtungsfaktoren $g^{(1)}$ bzw. $g^{bino}$ definiert ist, wobei die erste monokulare Funktion $F_{mono}^{(1)}$ von den Werten zumindest einer ersten monokularen optischen Eigenschaft $Mon^{(ml)}$ an einer Vielzahl von Bewertungsstellen $i_l$ des ersten Brillenglases abhängt, und wobei die binokulare Funktion $F_{bino}$ für eine Vielzahl von Paaren $\left(i_1^b, i_2^b\right)$ aus jeweils einer binokutaren Bewertungsstelle $i_1^b$ des ersten Brillenglases und einer in der bestimmten Gebrauchssituation dazu korrespondierenden binokularen Bewertungsstelle $i_2^b$ des zweiten Brillenglases von den Werten einer zweiten monokularen optischen Eigenschaft $Mon^{(b)}$ sowohl an der binokularen Bewertungsstelle $i_1^b$ des ersten Brillenglases als auch an der binokularen Bewertungsstelle $i_2^b$ des zweiten Brillenglases abhängt, wobei die zweite monokulare optische Eigenschaft $Mon^{(b)}$ eine nicht-prismatische optische Eigenschaft umfasst, und wobei der Restterm F nicht von den Werten der ersten monokularen optischen Eigenschaft an den Bewertungsstellen des ersten Brillenglases abhängt.

Je nach gewünschter Anwendung stellt das "erste" Brillenglas ein rechtes Brillenglas und das "zweite" Brillenglas ein linkes Brillenglas für ein Brille dar, oder umgekehrt. In Bezug auf die Abhängigkeiten der ersten monokularen und der binokularen Funktion von der ersten bzw. zweiten monokularen optischen Eigenschaft an den einzelnen Bewertungsstellen lässt sich die Zielfunktion insbesondere folgendermaßen darstellen:

$$ F = g^{(1)} F_{mono}^{(1)}\left(Mon_1^{(m1)}\left(i_1\right)\right) + g^{bino} F_{bino}\left(Mon_1^{(b)}\left(i_1^b\right), Mon_2^{(b)}\left(i_2^b\right)\right) + \widetilde{F} \,, $$

wobei in der Schreibweise $Mon_1{}^{(m1)}$ für die erste monokulare optische Eigenschaft der zusätzliche Index "1" zum Ausdruck bringt, dass diese Eigenschaft für das erste Brillenglas, also an einer Bewertungsstelle des ersten Brillenglases auszuwerten ist. Vorzugsweise könnte dieser Index, wie z.B. weiter oben bereits geschehen und nachfolgend noch gezeigt, auch weggelassen werden, insbesondere soweit klar wird, dass die Eigenschaft für einer Bewertungsstelle des ersten Brillenglases auszuwerten ist. Insbesondere hängt die erste monokulare Funktion nicht vom zweiten Brillenglas ab, weshalb sie in diesem Zusammenhang als "monokulare" Funktion bezeichnet wird. Die binokulare Funktion hängt hingegen von Wertepaaren korrespondierender Bewertungsstellen des ersten und zweiten Brillenglases ab, was durch die Bezeichnung "binokulare" Funktion zum Ausdruck gebracht wird. Damit gehen über die binokulare Funktion optische Eigenschaften beider Brillengläser in die Zielfunktion für die Optimierung des zumindest einen Brillenglases ein, wobei die Gewichtsfunktionen so gewählt werden, dass die binokulare Funktion $F_{bino}$ an zumindest einer Bewertungsstelle einen Beitrag zur Zielfunktion liefert. Aufgrund dieses Beitrags des zweiten Brillenglases erreicht das zumindest eine Brillenglas bei der Minimierung der Zielfunktion nicht das Optimum für eine Refraktionskorrektur des entsprechenden Auges.

Es stellt sich jedoch heraus, dass trotz einer solchen Verschlechterung der Abbildungsqualität des jeweiligen Brillenglases, das binokulare Sehen und somit die Verträglichkeit und Akzeptanz des Brillenglaspaares erheblich verbessert werden. Insbesondere stellt sich heraus, dass durch die Erfindung Unterschiede optischer Eigenschaften der beiden Brillengläser in korrespondierenden Durchblickpunkten sowie unterschiedliche Veränderungen der optischen Eigenschaften, insbesondere Abbildungsfehler, der beiden Brillengläser bei Blickbewegungen je nach Wahl der Gewichtsfunktionen mehr oder weniger stark aufeinander abgestimmt werden können, wodurch der binokulare Seheindruck und damit die gesamte empfundene Sehqualität sowie die Verträglichkeit einer Brille insbesondere unter binokularen Gesichtspunkten verbessert werden kann. Insbesondere stellt sich heraus, dass durch die erfindungsgemäße Berücksichtigung von monokularen Optimierungszielen über die zumindest eine monokulare Funktion einerseits und binokularen Abstimmungszielen zwischen den beiden Brillengläsern über die binokulare Funktion andererseits das zumindest eine erste Brillenglas für die Benutzung in der Brille zusammen mit dem zweiten Brillenglas verbessert werden kann, obwohl damit in Kauf genommen wird, dass zumindest eines der beiden Brillengläser sein monokulares Optimum nicht erreicht. Über die Gewichtsfunktionen kann der gewünschte Kompromiss zwischen monokularen und binokularen Anforderungen gesteuert werden.

Die Gebrauchssituation legt dabei eine Positionierung der Brillengläser vor den Augen des Brillenträgers und ein Objektabstandsmodell fest. Damit werden als Gebrauchssituation insbesondere Gebrauchsdaten bezüglich einer Positionierung der Brillengläser für einen Brillenträger und bezüglich einer Sehaufgabe des Brillenträgers erfasst oder bereitgestellt. Solche Gebrauchsdaten umfassen vorzugsweise Fassungsdaten, insbesondere bezüglich eines Kastenmaßes der Fassungsscheiben und/oder der Brückenweite und/oder eines Fassungsscheibenwinkels und/oder einer Vorneigung usw. der Brille. In einer bevorzugten Ausführungsform umfassen die Gebrauchsdaten bezüglich einer Sehaufgabe eine Vorgabe über hauptsächlich genutzte Blickwinkelbereiche und/oder hauptsächlich genutzte Objektentfernungen.

In jedem Fall legt die bestimmte Gebrauchssituation für eine Vielzahl von Blickrichtungen zumindest eines Auges des Brillenträgers die Position eines zugehörigen Objektpunkts derart eindeutig fest, dass damit auch der Sehstrahl des anderen Auges bei Betrachtung desselben Objektpunkts (in Abhängigkeit von der optischen Wirkung des zugehörigen Brillenglases) eindeutig festgelegt ist. Die beiden zu einem Objektpunkt gehörenden Sehstrahlen (für das rechte und linke Auge) werden dabei als korrespondierende Sehstrahlen bezeichnet. Entsprechende Durchtrittpunkte der korrespondierenden Sehstrahlen durch die beiden Brillengläser werden als korrespondierende Durchblickpunkte bezeichnet. Dabei kann jeder Durchblickpunkt auf der Vorder- und/oder Rückfläche eines Brillenglases eine Bewertungsstelle für das Brillenglas repräsentieren. Aufgrund der eindeutigen Zuordnung der Sehstrahlen und Objektpunkte zu den Durchblickstellen durch das Brillenglas könnte die jeweilige Bewertungsstelle auch durch den entsprechenden Sehstrahl bzw. die Blickrichtung und/oder den Objektpunkt repräsentiert werden. In einer bevorzugten Ausführungsform werden die Bewertungsstellen eines Brillenglases durch zwei Koordinaten eines in Bezug auf das Brillenglas festgelegten Koordinatensystems dargestellt. Vorzugsweise wird dazu ein kartesisches x-y-z-Koordinatensystem festgelegt, dessen Ursprung beispielsweise im geometrischen Mittelpunkt (des ungerandeten bzw. rohrunden ersten oder zweiten Brillenglases) bzw. im Glasmittelpunkt des ersten bzw. zweiten Brillenglases insbesondere auf dessen Vorderfläche befindet, wobei sich die y-Achse in vertikaler Richtung in der Gebrauchsstellung bzw. Gebrauchssituation erstreckt und die z-Achse zum Auge hinweist. Damit lassen sich die Bewertungsstellen insbesondere durch die x-y-Koordinaten der Durchblickspunkte repräsentieren.

Paare von Bewertungsstellen des rechten und linken Brillenglases, die korrespondierende Durchblickpunkte repräsentieren, werden als korrespondierende Bewertungsstellen bezeichnet. Die korrespondierenden Bewertungsstellen beziehen sich dabei auf einen gemeinsamen Objektpunkt, welcher von beiden Augen gleichzeitig betrachtet wird, weshalb die korrespondierenden Bewertungsstellen von der bestimmten Gebrauchssituation abhängig sind. Jede Bewertungsstelle eines Brillenglases, welche zu einem Paar korrespondierender Bewertungsstellen gehört trägt zum binokularen Sehen durch die Brille bei, weshalb diese Bewertungsstellen hier als "binokulare Bewertungsstellen" bezeichnet werden. Binokulare Bewertungsstellen $i_s^b$ des ersten ($s=1$) bzw. zweiten ($s=2$) Brillenglases sind somit alle diejenigen Bewertungsstellen $i_s$ des jeweiligen Glases, zu denen es eine korrespondierende Bewertungsstelle des anderen Brillenglases gibt. Die Menge aller binokularen Bewertungsstellen jedes Brillenglases bildet dabei ein binokular durchre-chenbares Gebiet $GB_s$ des jeweiligen Brillenglases.

Alle diejenigen Bewertungsstellen $i_s$ eine Brillenglases, zu denen es in der bestimmten Gebrauchssituation keine korrespondierende Bewertungsstelle des anderen Brillenglases gibt, insbesondere weil der korrespondierende Sehstrahl nicht durch das andere Brillenglas sondern daran vorbei verläuft, werden hier als monokulare Bewertungsstelle $i_s^m$ des jeweiligen Brillenglases bezeichnet. Demnach stellt insbesondere jede Bewertungsstelle $i_s$ eines Brillenglases entweder eine binokulare Bewertungsstelle $i_s^b$ oder eine monokulare Bewertungsstelle $i_s^m$ des Brillenglases dar.

Je nach gewünschter Anwendung oder Zielsetzung kann das erste bzw. zweite Brillenglas (bzw. das zu optimierende Brillenglaspaar) in einer vorgegebenen oder vorgebbaren Gebrauchssituation vor den Augen eines durchschnittlichen oder eines individuell bestimmten Brillenträgers angeordnet werden.

Eine durchschnittliche Gebrauchssituation (wie in DIN 58 208 Teil 2 definiert) kann durch:

- Parameter eines Standardauges, wie z.B. dem sogenannten Gullstrand-Auge eines Brillenträgers (Augendrehpunkt, Eintrittspupille, und/oder Hauptebene, etc.);
- Parameter einer Standardgebrauchsstellung bzw. Anordnung des Brillenglaspaares vor den Augen des Brillenträgers (Fassungsscheibenwinkel, Vorneigung, Hornhautscheitelabstand, etc.); und/oder
- Parameter eines Standardobjektmodells bzw. Standardobjektentfernung charakterisiert werden.

Die Gebrauchsposition kann beispielsweise anhand einer standardisierten Gebrauchsposition festgelegt werden. Bei Verwendung der Brillenfassung bzw. der Brille gemäß einer standardisierten Gebrauchsstellung beträgt der Augendrehpunktabstand etwa 27,4 mm oder etwa 27,9 mm oder etwa 28,5 mm oder etwa 28,8 mm, die Vorneigung, d.h. der pantoskopische Winkel beträgt etwa 8°, der Fassungsscheibenwinkel beträgt etwa 0°, die Pupillendistanz beträgt etwa 63 mm, der Hornhautscheitelabstand beträgt etwa 15 mm, die Objektentfernung im Fernbezugspunkt beträgt etwa 0 dpt und die Objektentfernung im Nahbezugspunkt beträgt etwa -2,5 dpt.

Insbesondere beträgt bei einer Verwendung der Brillenfassung bzw. der Brille gemäß einer standardisierten Gebrauchsstellung der Augendrehpunktabstand etwa 26,5 mm, die Vorneigung, d.h. der pantoskopische Winkel etwa 9°, der Fassungsscheibenwinkel etwa 5°, die Pupillendistanz etwa 64 mm und der Hornhautscheitelabstand beträgt etwa 13 mm.

Alternativ beträgt bei einer Verwendung der Brillenfassung bzw. der Brille gemäß einer standardisierten Gebrauchsstellung der Augendrehpunktabstand etwa 28,5 mm, die Vorneigung, d.h. der pantoskopische Winkel etwa 7°, der Fassungsscheibenwinkel etwa 0°, die Pupillendistanz etwa 63 mm und der Hornhautscheitelabstand beträgt etwa 15 mm.

Alternativ beträgt bei einer Verwendung der Brillenfassung bzw. der Brille gemäß einer standardisierten Gebrauchsstellung der Augendrehpunktabstand etwa 25 mm, die Vorneigung, d.h. der pantoskopische Winkel etwa 8°, der Fassungsscheibenwinkel etwa 5°, die Pupillendistanz etwa 64 mm und der Hornhautscheitelabstand beträgt etwa 13 mm.

Alternativ beträgt bei einer Verwendung der Brillenfassung bzw. der Brille gemäß einer standardisierten Gebrauchsstellung der Augendrehpunktabstand etwa 27,5 mm, die Vorneigung, d.h. der pantoskopische Winkel etwa 11°, der Fassungsscheibenwinkel etwa 0°, die Pupillendistanz etwa 65 mm und der Hornhautscheitelabstand beträgt etwa 14 mm.

Die folgenden numerischen Parameter charakterisieren beispielsweise eine durchschnittliche Gebrauchssituation:

Hornhautscheitelabstand (HSA) = 15,00 mm;
Vorneigung = 8,0 Grad;
Fassungsscheibenwinkel = 0,0 Grad;
Pupillendistanz = 63,0 mm;
Augendrehpunktabstand e = 28,5mm;
Objektabstandmodell: unendlicher Objektabstand im oberen Abschnitt des Brillenglases, welcher fließend in einen Objektabstand von -2,6 dpt bei x = 0 mm, y = -20 mm übergeht.

Alternativ können aber auch individuelle Parameter des Auges bzw. der Augen eines bestimmten Brillenträgers (Augendrehpunkt, Eintrittspupille, und/oder Hauptebene, etc.), der individuellen Gebrauchsstellung bzw. Anordnung vor den Augen des Brillenträgers (Fassungsscheibenwinkel, Vorneigung, Hornhautscheitelabstand, etc.) und/oder des individuellen Objektentfernungsmodells berücksichtigt werden.

Die monokularen optischen Eigenschaften betreffen jeweils lokale optische Eigenschaften eines einzelnen Brillenglases, also des ersten bzw. zweiten Brillenglases in Transmission, also in der bestimmten Gebrauchsstellung ohne Berücksichtigung des jeweils anderen Brillenglases. Aus diesem Grund werden diese optischen Eigenschaften daher als "monokulare" optische Eigenschaften bezeichnet. Sie hängt in jeder Bewertungsstelle von der Vorder- und Rückfläche des jeweiligen Brillenglases sowie deren Lage zueinander und relativ zum Auge und zum Objektpunkt ab. Die zumindest eine erste monokulare optische Eigenschaft und die zumindest eine zweite monokulare optische Eigenschaft können dieselbe oder verschiedene monokulare optische Eigenschaften betreffen.

Währen die in der ersten monokularen Funktion berücksichtigte erste monokulare optische Eigenschaft für die Auswertung der ersten monokularen Funktion nur an Bewertungsstellen des ersten Brillenglases ausgewertet wird, wird die monokulare optische Eigenschaft in der binokularen Funktion sowohl an Bewertungsstellen des ersten Brillenglases (unabhängig vom zweiten Brillenglas) als auch an Bewertungsstellen des zweiten Brillenglases (unabhängig vom ersten Brillenglas) ausgewertet. Die einzige Abhängigkeit für diese Auswertungen stellt die Wahl der binokularen Bewertungsstellen des ersten bzw. zweiten Brillenglases dar, welche zumindest teilweise paarweise korrespondierende Bewertungsstellen betreffen.

Die Restfunktion $\tilde{F}$ kann von weiteren optischen Eigenschaften abhängen. In einer bevorzugten Ausführungsform ist die Restfunktion identisch null ($\tilde{F}$ = 0), so dass die Zielfunktion als Summanden lediglich die erste monokulare Funktion und die binokulare Funktion mit den entsprechenden Gewichtungsfaktoren enthält. Die Restfunktion $\tilde{F}$ hängt nicht von den Werten der ersten monokularen optischen Eigenschaft an den Bewertungsstellen des ersten Brillenglases ab. Insbesondere hängt die Restfunktion $\tilde{F}$ vorzugsweise nicht explizit vom ersten Brillenglas ab.

Außerdem umfasst $\tilde{F}$ als weiteren Summanden der Zielfunktion $F$ zumindest eine zweite monokulare Funktion $F_{mono}^{2}$, welche von den Werten zumindest einer weiteren bzw. dritten monokularen optischen Eigenschaft $Mon^{(m2)}$ an einer Vielzahl von Bewertungsstellen $i_2$ des zweiten Brillenglases abhängt. Demnach erfolgt der binokulare Berechnungs- bzw. Optimierungsschritt vorzugsweise derart, dass in der Zielfunktion gemäß

$$F = g^{(1)}F_{\mathrm{mono}}^{(1)} + g^{(2)}F_{\mathrm{mono}}^{(2)} + g^{\mathrm{bino}}F_{\mathrm{bino}} + \tilde{F}^{*}$$

als weiterer Summand eine zweite monokulare Funktion $F_{mono}^{(2)}$ mit einem Gewichtungsfaktor $g^{(2)}$ berücksichtigt wird, welche von den Werten zumindest einer dritten monokularen optischen Eigenschaft $Mon^{(m2)}$ an einer Vielzahl von Bewertungsstellen $i_2$ des zweiten Brillenglases abhängt. Besonders bevorzugt gilt dabei für die weitere Restfunktion $\tilde{F}^*$ = 0.

In Bezug auf die Abhängigkeiten der einzelnen Funktionen von den an den jeweiligen Bewertungsstellen ausgewerteten monokularen optischen Eigenschaften lässt sich die Zielfunktion demnach vorzugsweise folgendermaßen darstellen:

$$F = g^{(1)} F_{mono}^{(1)} \left( Mon_1^{(m1)}(i_1) \right) + g^{(2)} F_{mono}^{(2)} \left( Mon_2^{(m2)}(i_2) \right) + g^{bino} F_{bino} \left( Mon_1^{(b)}(i_1^{(b)}), Mon_2^{(b)}(i_2^{(b)}) \right) + \tilde{F}^*$$

Wiederum bezeichnet der zusätzliche Index "2" in der Darstellung $Mon_2^{(m2)}$ für die dritte monokulare optischen Eigenschaft, dass diese auf dem zweien Brillenglas, also für eine Bewertungsstelle des zweiten Brillenglases auszuwerten ist. Der Index kann insbesondere dann weggelassen werden, wenn klar ist, dass die Auswertung für das zweite Brillenglas zu erfolgen hat. In einer bevorzugten Ausführungsform entspricht die zumindest eine dritte monokulare optischen Eigenschaft der zumindest einen ersten monokularen optischen Eigenschaft und/oder der zumindest einen zweiten monokularen optischen Eigenschaft, wobei lediglich ihre Werte an den Bewertungsstellen des zweiten Brillenglases in die zweite monokulare Funktion einfließen.

Vorzugsweise erfolgt der binokulare Berechnungs- bzw. Optimierungsschritt derart, dass in der ersten und/oder zweiten monokularen Funktion gemäß

$$F_{mono}^{(s)} = \sum_m \sum_{i_s} g_s^{(m)}(i_s) \left( Mon_s^{(m)}(i_s) - Mon_{s,Soll}^{(m)}(i_s) \right)^2$$

Abweichungen der Werte zumindest einer ersten $m = m1$ bzw. dritten $m = m2$ monokularen optischen Eigenschaft $Mon_s^{(m)}$ von zugehörigen Sollwerten $Mon_{s,Soll}^{(m)}$ an den Bewertungsstellen $i_s$ des ersten ($s=1$) bzw. zweiten ($s=2$) Brillenglases mit jeweiligen Gewichtungsfaktoren $g_s^{(m)}(i_s)$ berücksichtigt werden.

Besonders bevorzugt erfolgt der binokulare Berechnungs- bzw. Optimierungsschritt derart, dass die zumindest eine in der ersten und/oder zweiten monokularen Funktion berücksichtigte monokulare optische Eigenschaft das sphärische Äquivalent $Mon^{(1)} = S_\Delta$ und/oder den Betrag des Zylinders $Mon^{(2)} = Z_\Delta$ des Refraktionsdefizits des ersten bzw. zweiten Brillenglases umfasst. Insbesondere erfolgt der binokulare Berechnungs- bzw. Optimierungsschritt vorzugsweise derart, dass die Zielfunktion mit einer ersten und/oder zweiten monokularen Funktion

$$F_{mono}^{(s)}(S_\Delta, Z_\Delta) = \sum_{i_s} \left( g_{S,s}(i_s)(S_\Delta(i_s) - S_{\Delta,Soll}(i_s))^2 + g_{Z,s}(i_s)(Z_\Delta(i_s) - Z_{\Delta,Soll}(i_s))^2 \right)$$

minimiert wird. Hier und nachfolgend wird insbesondere auf einen weiteren Index für die Bezeichnung der monokularen optischen Eigenschaft verzichtet, soweit die beispielhaften monokularen optischen Eigenschaften auf beide Brillengläser, d.h. als erste und/oder dritte monokulare optische Eigenschaft, anwendbar sind.

Vorzugsweise erfolgt der binokulare Berechnungs- bzw. Optimierungsschritt derart, dass die binokulare Funktion $F_{bino}$ für jedes Paar $\left( i_1^b, i_2^b \right)$ binokularer Bewertungsstellen von der Differenz

$$Mon^{(b)}\left( i_1^b \right) - Mon^{(b)}\left( i_2^b \right)$$

zwischen dem Wert der zweiten monokularen optischen Eigenschaft $Mon^{(b)}$ an der binokularen Bewertungsstelle $i_1^b$ des ersten Brillenglases und dem Wert der zweiten monokularen optischen Eigenschaft $Mon^{(b)}$ an der korrespondierenden binokularen Bewertungsstelle $i_2^b$ des zweiten Brillenglases abhängt.

Vorzugsweise erfolgt der binokulare Berechnungs- bzw. Optimierungsschritt derart, dass in der binokularen Funktion gemäß

$$F_{bino} = \sum_k \sum_i g_{bin}^{(k)}(i)\left(Bin^{(k)}(i) - Bin_{Soll}^{(k)}(i)\right)^2$$

Abweichungen der Werte zumindest einer binokularen optischen Eigenschaft $Bin^{(k)}$ von zugehörigen Sollwerten $Bin_{Soll}^{(k)}$ an Bewertungsstellen $i$ des ersten und/oder zweiten Brillenglases mit jeweiligen Gewichtungsfaktoren $g_{bin}^{(k)}(i)$ berücksichtigt werden, wobei die Summation über die Bewertungsstellen $i$ zumindest über die binokularen Bewertungsstellen $i_1^b$ des ersten bzw. zweiten Brillenglases erfolgt und die zumindest eine binokulare optische Eigenschaft $Bin^{(k)}$ für jede binokulare Bewertungsstelle $i_1^b$ des ersten Brillenglases sowohl vom Wert der zumindest einen zweiten monokularen optischen Eigenschaft $Mon^{(b)}$ an der binokularen Bewertungsstelle $i_1^b$ des ersten Brillenglases als auch vom Wert der zumindest einen zweiten monokularen optischen Eigenschaft $Mon^{(b)}$ an der dazu korrespondierenden binokularen Bewertungsstelle $i_2^b$ des zweiten Brillenglases abhängt. Aufgrund der Korrespondenz der binokularen Bewertungsstellen wird insbesondere nur über Paare binokularer Bewertungsstellen summiert. Dabei kann jedes Paar korrespondierender binokularer Bewertungsstellen als Bewertungsstellenpaar $i^b = \left(i_1^b, i_2^b\right)$ dargestellt werden, so dass die Summation über die Bewertungsstellenpaare $i^b$ läuft.

Vorzugsweise umfasst das Verfahren außerdem:

- Bestimmen einer Vielzahl von ersten monokularen Bewertungsstellen $i_1^m$ als diejenigen Bewertungsstellen $i_1$ des ersten Brillenglases, zu denen in der bestimmten Gebrauchssituation keine korrespondierende Bewertungsstelle des zweiten Brillenglases existiert, und

- Zuordnen jeweils einer Bewertungsstelle $i_2$ des zweiten Brillenglases als zweite monokulare Referenzstelle $i_2^r$ zu jeder ersten monokularen Bewertungsstelle $i_1^m$. Damit wird also insbesondere ein monokulares Bewertungsstellenpaar $\left(i_1^b, i_2^r\right)$ festgelegt. Der binokulare Berechnungs- bzw. Optimierungsschritt erfolgt dabei vorzugsweise derart, dass die Summation über die Bewertungsstellen $i$ in der binokularen Funktion $F_{bino}$ über alle Bewertungsstellen $i_1$ des ersten Brillenglases erfolgt, und wobei die zumindest eine binokulare optische Eigenschaft $Bin^{(k)}$ für jede erste monokulare Bewertungsstelle $i_1^m$ des ersten Brillenglases sowohl vom Wert der zumindest einen zweiten monokularen optischen Eigenschaft $Mon^{(b)}$ an der ersten monokularen Bewertungsstelle $i_1^m$ des ersten Brillenglases als auch vom Wert der zumindest einen zweiten monokularen optischen Eigenschaft $Mon^{(b)}$ an der dieser ersten monokularen Bewertungsstelle $i_1^m$ zugeordneten zweiten monokularen Referenzstelle $i_2^r$ des zweiten Brillenglases abhängt.

$$F_{bino} = \sum_k \left( \begin{array}{l} \sum_{i_1 \in GB_1} g_{Bin}^{(k)}(i_1)(Bin^{(k)}(i_1) - Bin_{Soll}^{(k)}(i_1))^2 \\ + \sum_{\substack{i_1 \in G_1 \\ i_1 \notin GB_1}} g_{Bin}^{(k)}(i_1)(Bin^{(k)}(i_1) - Bin_{Soll}^{(k)}(i_1))^2 \end{array} \right)$$

$$= \sum_k \left( \begin{array}{l} \sum_{i_1} g_{Bin}^{(k)}(i_1)(Bin^{(k)}(i_1) - Bin_{Soll}^{(k)}(i_1))^2 \\ + \sum_{i_1^m} g_{Bin}^{(k)}(i_1^m)(Bin^{(k)}(i_1^m) - Bin_{Soll}^{(k)}(i_1^m))^2 \end{array} \right)$$

Über die damit definierte Übergangsbedingung am Rand des Brillenglases, insbesondere aufgrund der resultierenden Stetigkeitsbedingung für die Zielfunktion wird ein besonders harmonischer Seheindruck und Übergang zwischen zentralem und peripherem Bereich des Brillenglases mit einer guten Verträglichkeit des Brillenglases für die Verwendung in einer Brille zusammen mit dem zweiten Brillenglas erreicht.

Vorzugsweise umfasst das Verfahren außerdem:

- Bestimmen einer Vielzahl von zweiten monokularen Bewertungsstellen $i_2^m$ als diejenigen Bewertungsstellen $i_2$ des zweiten Brillenglases, zu denen in der bestimmten Gebrauchssituation keine korrespondierende Bewertungsstelle des ersten Brillenglases existiert, (oder welche nicht als korrespondierende Bewertungsstellen einer Bewertungsstelle des ersten Brillenglases auftreten, bzw. welche nicht als binokulare Bewertungsstellen auftreten), und

- Zuordnen jeweils einer Bewertungsstelle $i_1$ des ersten Brillenglases als erste monokulare Referenzstelle $i_1^r$ zu jeder zweiten monokularen Bewertungsstelle $i_2^m$ wobei der binokulare Berechnungs- bzw. Optimierungsschritt derart erfolgt, dass die Summation über die Bewertungsstellen $i$ in der binokularen Funktion $F_{bino}$ außerdem über die zweiten monokularen Bewertungsstellen des zweiten Brillenglases erfolgt, und wobei die zumindest eine binokulare optische Eigenschaft $Bin^{(k)}$ für jede zweite monokulare Bewertungsstelle $i_2^m$ [des zweiten Brillenglases] sowohl vom Wert der zumindest einen zweiten monokularen optischen Eigenschaft $Mon^{(b)}$ an der zweiten monokularen Bewertungsstelle $i_2^m$ des zweiten Brillenglases als auch vom Wert der zumindest einen zweiten monokularen optischen Eigenschaft $Mon^{(b)}$ an der dieser zweiten monokularen Bewertungsstelle $i_2^m$ zugeordneten ersten monokularen Referenzstelle $i_1^r$ des ersten Brillenglases abhängt.

Vorzugsweise wird einer Vielzahl von ersten $\left(i_1^m\right)$ und/oder zweiten monokularen Bewertungsstellen $i_2^m$ besonders bevorzugt jeder ersten $\left(i_1^m\right)$ und/oder zweiten monokularen Bewertungsstelle $i_2^m$ die in der bestimmten Gebrauchssituation dazu horizontalsymmetrische Bewertungsstelle $i$ des zweiten bzw. ersten Brillenglases als entsprechende zweite $i_2^r$ bzw. erste monokulare Referenzstelle $i_1^r$ zugeordnet. In einer bevorzugten Ausführungsform gilt in diesem Zusammenhang ein Paar $(i_1, i_2)$ von Bewertungsstellen als horizontalsymmetrisch, wenn die zugehörigen Durchblickpunkte in der bestimmten Gebrauchssituation in lokalen Koordinatensystemen des rechten bzw. linken Brillenglases in horizontaler Richtung gegengleiche Koordinaten aufweisen, also zu einem jeweiligen Symmetriereferenzpunkt (Koordinatenursprung) des ersten bzw. zweiten Brillenglases in horizontaler Richtung gegengleich, also um dieselbe Distanz aber entgegen gesetzter Richtung versetzt sind, in vertikaler Richtung insbesondere aber dieselben Koordinaten aufweisen. Für die bereits oben beispielhaft beschriebenen Koordinatensysteme gilt damit $P_{1,x} = -P_{2,x}$ für die x-Komponenten $P_{1,x}$ bzw. $P_{2,x}$ der beiden Durchblickpunkte. In einer bevorzugten Ausführungsform liegen die Koordinatenursprünge der lokalen Koordinatensysteme an Durchblickpunkten der Vorderflächen der Brillengläser in Nullblickrichtung des rechten bzw. linken Auges in der bestimmten Gebrauchssituation. Der jeweilige Symmetriereferenzpunkt ist damit vorzugsweise unabhängig von der vertikalen Koordinate bzw. Position der horizontalsymmetrischen Bewertungsstellen bzw. Durchblickpunkte. In einer anderen bevorzugten Ausführungsform hängen die Ursprünge der beiden lokalen Koordinatensysteme, also die Symmetriereferenzpunkte, von der vertikalen Position der Durchblickpunkte ab, und zwar so, dass die Punkte mit $P_{1,x} = 0$ für alle ersten y-Werte auf der Hauptblicklinie des ersten Brillenglases und die Punkte mit $P_{2,x} = 0$ für alle zweiten y-Werte auf der Hauptblicklinie des zweiten Brillenglases liegen. Damit weisen horizontalsymmetrische Durchblickpunkte dieselbe horizontale Distanz zur jeweiligen Hauptdurchblicklinie auf, wobei der jeweilige Symmetriereferenzpunkt derjenige Punkt auf der Hauptdurchblicklinie mit derselben vertikalen Position wie der jeweilige Durchblickpunkt des Paares horizontalsymmetrischer Durchblickpunkte ist. Dabei sind aber entweder beide Durchblickpunkte nasal oder beide temporal zum Symmetriereferenzpunkt verschoben.

Die zumindest eine zweite optische Eigenschaft $Mon^{(b)}$ umfasst eine nicht-prismatische optische Eigenschaft. Die zumindest eine zweite optische Eigenschaft $Mon^{(b)}$ betrifft damit zumindest eine nicht rein die prismatische Wirkung, insbesondere die Prismendifferenz charakterisierende bzw. nicht ausschließlich von der prismatischen Wirkung, insbesondere einer Prismendifferenz abhängige monokulare Eigenschaft. Insbesondere hängt die binokulare Funktion nicht nur von den Werten einer prismatischen Wirkung des ersten und/oder zweiten Brillenglases, insbesondere einer Differenz prismatischer Wirkungen des ersten und zweiten Brillenglases ab. In einer bevorzugten Ausführungsform umfasst die zumindest eine zweite monokulare optische Eigenschaft zumindest eine nicht-prismatische monokulare optische Eigenschaft.

In einer anderen bevorzugten Ausführungsform erfolgt der Berechnungs- bzw. Optimierungsschritt derart, dass die Differenz der vertikalen und/oder horizontalen prismatischen Wirkung und einer vertikalen bzw. horizontalen prismatischen Referenzwirkung in der binokularen Zielfunktion gemäß

$$F_{bino} = \sum_i gP_i((PR(i) - PL(i)) - P_{soll}(i))^2 + \widetilde{F}_{bino}$$

mit einer Restfunktion $\widetilde{F}_{bino}$ berücksichtigt wird, wobei

PR(i)     eine tatsächliche vertikale und/oder horizontale prismatische Wirkung an der $i$-ten Bewertungsstelle des rechten Brillenglases;

PL(i)     eine tatsächliche vertikale und/oder horizontale prismatische Wirkung an der $i$-ten Bewertungsstelle des linken Brillenglases;

$P_{soll}$(i)     einen Sollwert der Differenz $\Delta P$ der vertikalen und/oder horizontalen prismatischen Wirkung zwischen dem rechten und dem linken Brillenglas an den durch die $i$-ten Bewertungsstelle festgelegten korrespondierenden Punkten der Brillengläses; und

$gP_i$     eine Gewichtung der vertikalen und/oder horizontalen prismatischen Wirkung an der $i$-ten Bewertungsstelle des Brillenglases

bezeichnen. In einer bevorzugten Ausführungsform gilt $\widetilde{F}_{bino} = 0$.

Die vertikale bzw. horizontale prismatische Wirkung wird als die jeweilige vertikale bzw. horizontale Komponente der prismatischen Wirkung definiert.

Vorzugsweise umfasst das Verfahren vor dem binokularen Berechnungs- bzw. Optimierungsschritt einen ersten und/oder zweiten monokularen Berechnungs- bzw. Optimierungsschritt derart, dass die erste monokulare Funktion $F_{mono}^{(1)}$ bzw. die zweite monokulare Funktion $F_{mono}^{(2)}$ minimiert wird.

Der erste bzw. zweite monokulare Berechnungs- bzw. Optimierungsschritt erfolgt dabei derart, dass in diesem Schritt die jeweils andere monokulare Funktion nicht berücksichtigt wird. Das Vorschalten des ersten bzw. zweiten monokularen Berechnungs- bzw. Optimierungsschritts ergibt dabei ein monokular optimiertes erstes bzw. zweites Brillenglas, welches als bevorzugte Ausgangsbedingung für die binokulare Optimierung im nachfolgenden binokularen Berechnungs- bzw. Optimierungsschritt dient und zu einer besonders schnellen und genauen Optimierung bzw. Herstellung des zumindest einen Brillenglases beiträgt.

Vorzugsweise wird für jede binokulare Bewertungsstelle $i_1^b$ des ersten Brillenglases die korrespondierende binokulare Bewertungsstelle $i_2^b$ des zweiten Brillenglases für die bestimmte Gebrauchssituation mittels Ray-Tracing unter Annahme der Orthotropie ermittelt.

Vorzugsweise umfasst das Verfahren außerdem einen Schritt des Bestimmens bzw. Festlegens eines Führungsauges, wobei das dem Führungsauge entsprechende Brillenglas des Paares von Brillengläsern als zweites Brillenglas festgelegt wird.

Vorzugsweise umfasst der binokulare Berechnungs- bzw. Optimierungsschritt einen ersten einseitigen Variationsschritt derart, dass die Zielfunktion F durch Variation bzw. Modifikation der zumindest einen Fläche des ersten Brillenglases minimiert wird, während das zweite Brillenglas unverändert bleibt. Besonders bevorzugt umfasst der binokulare Berechnungs- bzw. Optimierungsschritt außerdem einen zweiten einseitigen Variationsschritt derart, dass die Zielfunktion $F$ durch Variation zumindest einer Fläche des zweiten Brillenglases minimiert wird, während das erste Brillenglas unverändert bleibt. Vorzugsweise wird der erste einseitige Variationsschritt vor dem zweiten einseitigen Variationsschritt ausgeführt.

Vorzugsweise erfolgt der binokulare Berechnungs- bzw. Optimierungsschritt derart, dass der erste und zweite einseitige Variationsschritt jeweils nacheinander mehrmals abwechselnd ausgeführt werden. Dabei wird vorzugsweise mit dem ersten einseitigen Variationsschritt begonnen.

Vorzugsweise umfasst der binokulare Berechnungs- bzw. Optimierungsschritt eine Vielzahl von beidseitigen Variationsschritten derart, dass jeder beidseitige Variationsschritt umfasst:

- Verändern bzw. Modifizieren zumindest einer Fläche sowohl des ersten als auch des zweiten Brillenglases; und
- Auswerten der Zielfunktion für die geänderten bzw. modifizierten Brillengläser.

Außerdem wird durch die Erfindung ein Computerprogrammerzeugnis bereitgestellt, welches Programmteile enthält, welche ausgelegt sind, wenn geladen und ausgeführt auf einem Computer, ein Verfahren zur Optimierung zumindest eines ersten Brillenglases für ein Paar von Brillengläsern zur Benutzung zusammen mit einem zweiten Brillenglas des Paares von Brillengläsern in einer Brille für eine bestimmte Gebrauchssituation durchzuführen, wobei das Verfahren zur Optimierung der zumindest einen Fläche des ersten Brillenglases einen binokularen Berechnungs- bzw. Optimierungsschritt umfasst, welcher derart erfolgt, dass eine Zielfunktion

$$F = g^{(1)}F_{\mathrm{mono}}^{(1)} + g^{\mathrm{bino}}F_{\mathrm{bino}} + \widetilde{F}$$

minimiert wird, welche als Summe aus zumindest einer ersten monokularen Funktion $F_{mono}^{(1)}$ und einer binokularen Funktion $F_{\mathrm{bino}}$ mit jeweiligen Gewichtungsfaktoren $g^{(1)}$ bzw. $g^{bino}$ definiert ist, wobei die erste monokulare Funktion $F_{mono}^{1}$ von den Werten zumindest einer ersten monokularen optischen Eigenschaft $Mon^{(m1)}$ an einer Vielzahl von Bewertungsstellen $i_1$ des ersten Brillenglases abhängt, und wobei die binokulare Funktion $F_{\mathrm{bino}}$ für eine Vielzahl von Paaren $\left(i_1^b, i_2^b\right)$ aus jeweils einer binokularen Bewertungsstelle $i_1^b$ des ersten Brillenglases und einer in der bestimmten Gebrauchssituation dazu korrespondierenden binokularen Bewertungsstelle $i_2^b$ des zweiten Brillenglases von den Werten einer zweiten monokularen optischen Eigenschaft $Mon^{(b)}$ sowohl an der binokularen Bewertungsstelle $i_1^b$ des ersten Brillenglases als auch an der binokularen Bewertungsstelle $i_2^b$ des zweiten Brillenglases abhängt, wobei die zweite monokulare optische Eigenschaft $Mon^{(b)}$ eine nicht-prismatische optische Eigenschaft umfasst, und wobei der Restterm $\widetilde{F}$ nicht von den Werten der ersten monokularen optischen Eigenschaft an den Bewertungsstellen des ersten Brillenglases abhängt.

In einem weiteren Aspekt wird durch die Erfindung ein Speichermedium mit einem darauf gespeicherten Computerprogramm bereitgestellt, wobei das Computerprogramm ausgelegt ist, wenn geladen und ausgeführt auf einem Computer, ein Verfahren zur Optimierung zumindest eines ersten Brillenglases für ein Paar von Brillengläsern zur Benutzung zusammen mit einem zweiten Brillenglas des Paares von Brillengläsern in einer Brille für eine bestimmte Gebrauchssituation durchzuführen, wobei das Verfahren zur Optimierung der zumindest einen Fläche des ersten Brillenglases einen binokularen Berechnungs- bzw. Optimierungsschritt umfasst, welcher derart erfolgt, dass eine Zielfunktion

$$F = g^{(1)}F_{\mathrm{mono}}^{(1)} + g^{\mathrm{bino}}F_{\mathrm{bino}} + \widetilde{F}$$

minimiert wird, welche als Summe aus zumindest einer ersten monokularen Funktion $F_{mono}^{(1)}$ und einer binokularen Funktion $\widetilde{F}_{bino}$ mit jeweiligen Gewichtungsfaktoren $g^{(1)}$ bzw. $g^{bino}$ definiert ist, wobei die erste monokulare Funktion $F_{mono}^{1}$ von den Werten zumindest einer ersten monokularen optischen Eigenschaft $Mon^{(m1)}$ an einer Vielzahl von Bewertungsstellen $i_1$ des ersten Brillenglases abhängt, und wobei die binokulare Funktion $F_{\mathrm{bino}}$ für eine Vielzahl von Paaren $\left(i_1^b, i_2^b\right)$ aus jeweils einer binokularen Bewertungsstelle $i_1^b$ des ersten Brillenglases und einer in der bestimmten Gebrauchssituation dazu korrespondierenden binokularen Bewertungsstelle $i_2^b$ des zweiten Brillenglases von den Werten einer zweiten monokularen optischen Eigenschaft $Mon^{(b)}$ sowohl an der binokularen Bewertungsstelle $i_1^b$ des ersten Brillenglases als auch an der binokularen Bewertungsstelle $i_2^b$ des zweiten Brillenglases abhängt, wobei die zweite monokulare optische Eigenschaft $Mon^{(b)}$ eine nicht-prismatische optische Eigenschaft umfasst, und wobei der Restterm F nicht von den Werten der ersten monokularen optischen Eigenschaft an den Bewertungsstellen des ersten Brillenglases abhängt.

Schließlich wird durch die Erfindung eine Vorrichtung zur Herstellung eines Brillenglases bereitgestellt, wobei die Vorrichtung umfasst:

- Erfassungsmittel zum Erfassen von Zieldaten bzw. Zielvorgaben eines Brillenglases;

- Berechnungs- und Optimierungsmittel zum Berechnen und Optimieren zumindest eines ersten Brillenglases für ein Paar von Brillengläsern zur Benutzung zusammen mit einem zweiten Brillenglas des Paares von Brillengläsern in einer Brille für eine bestimmte Gebrauchssituation, wobei das Verfahren zur Optimierung der zumindest einen Fläche des ersten Brillenglases einen binokularen Berechnungs- bzw. Optimierungsschritt umfasst, welcher derart erfolgt, dass eine Zielfunktion

$$F = g^{(1)} F^{(1)}_{\text{mono}} + g^{\text{bino}} F_{\text{bino}} + \widetilde{F}$$

minimiert wird, welche als Summe aus zumindest einer ersten monokularen Funktion $F^{(1)}_{mono}$ und einer binokularen Funktion $F_{\text{bino}}$ mit jeweiligen Gewichtungsfaktoren $g^{(1)}$ bzw. $g^{bino}$ definiert ist, wobei die erste monokulare Funktion $F^{1}_{mono}$ von den Werten zumindest einer ersten monokularen optischen Eigenschaft $Mon^{(m1)}$ in Bezug auf die Zieldaten bzw. Zielvorgaben des ersten Brillenglases an einer Vielzahl von Bewertungsstellen $i_1$ des ersten Brillenglases abhängt, und wobei die binokulare Funktion $\tilde{F}_{bino}$ für eine Vielzahl von Paaren $\left( i^b_1, i^b_2 \right)$ aus jeweils einer binokularen Bewertungsstelle $i^b_1$ des ersten Brillenglases und einer in der bestimmten Gebrauchssituation dazu korrespondierenden binokularen Bewertungsstelle $i^b_2$ des zweiten Brillenglases von den Werten einer zweiten monokularen optischen Eigenschaft $Mon^{(b)}$ sowohl an der binokularen Bewertungsstelle $i^b_1$ des ersten Brillenglases als auch an der binokularen Bewertungsstelle $i^b_2$ des zweiten Brillenglases abhängt, wobei die zweite monokulare optische Eigenschaft $Mon^{(b)}$ eine nicht-prismatische optische Eigenschaft umfasst, und wobei der Restterm $F$ nicht von den Werten der ersten monokularen optischen Eigenschaft an den Bewertungsstellen des ersten Brillenglases abhängt.

Dabei ist es möglich, die Zieldaten für das zumindest eine Brillenglas als individuelle Rezeptdaten des Brillenträgers insbesondere zusammen mit weiteren individuellen Daten des Brillenträgers, insbesondere einer individuellen Gebrauchsstellung und/oder eines individuellen Objekt-Abstandsmodells automatisch zu vermessen oder über eine Benutzerschnittstelle als Erfassungsmittel an das System bzw. die Vorrichtung zur Herstellung eines Brillenglases zu übertragen bzw. zu übergeben.

Insbesondere werden Rezeptdaten der beiden Brillengläser des Brillenglaspaares und/oder die individuellen Daten des Brillenträges, der Gebrauchsstellung und/oder des Objektmodells vorzugsweise per Datenfernübertragung bzw. "online" an eine erfindungsgemäße Vorrichtung zur Herstellung eines Brillenglases zu übermitteln. Die Optimierung des Brillenglases unter Berücksichtigung der Anisometropie des Brillenträgers erfolgt aufgrund der übermittelten, Rezeptdaten und/oder individuellen Daten. Damit stellen die Zieldaten insbesondere die Grundlage für die in der Zielfunktion zu berücksichtigenden Ziel- oder Sollvorgaben optischer Eigenschaften des Brillenglases insbesondere in der individuellen Gebrauchsstellung.

Die erfindungsgemäß optimierten Brillengläser bzw. Brillenglasflächen werden vorzugsweise mittels numerisch gesteuerter Werkzeuge aus Mineralglas oder Kunststoff hergestellt.

Die Erfindung wird nachfolgend anhand von bevorzugten Ausführungsformen unter Bezugnahme auf die beigefügten Zeichnungen beschrieben. Dabei zeigen:

Fig. 1A und 1B    Isolinien der Astigmatismusdifferenz für ein herkömmlich optimiertes (Fig. 1A) und ein erfindungsgemäß optimiertes (Fig. 1 B) Brillenglas in Gebrauchsstellung (Glas + Auge);

Fig. 2A und 2B    Isolinien der Brechwertdifferenz für ein herkömmlich optimiertes (Fig. 2A) und ein erfindungsgemäß optimiertes (Fig. 2B) Brillenglas in Gebrauchsstellung (Glas + Auge);

Fig. 3A und 3B    Isolinien des Refraktionsungleichgewicht für ein herkömmlich optimiertes (Fig. 3A) und ein erfindungsgemäß optimiertes (Fig. 3B) Brillenglas in Gebrauchsstellung (Glas + Auge); und

Fig. 4    eine schematische Darstellung eines Beispiels einer bevorzugten Vorrichtung zum Optimieren bzw. Herstellen des zumindest einen Brillenglases.

Zur Optimierung und Herstellung von Brillenglaspaaren gemäß der Erfindung wird insbesondere ein Optimierungsverfahren angewendet, bei dem binokulare Differenzen von Gebrauchseigenschaften in eine Zielfunktion einfließen. Dabei werden erfindungsgemäß die lokalen optischen Eigenschaften der Brillengläser im tatsächlichen Strahlengang einer bestimmten Gebrauchssituation und nicht nur die Flächenwerte berücksichtigt.

Zur besseren Verständlichkeit wird zunächst eine monokulare Optimierung, wie sie z.B. in W. Becken et al., "Optimierung der Abbildungseigenschaften unter physiologischen Aspekten", Z. Med. Phys, 1/2007 beschrieben ist, dargestellt. Ausschlaggebend für Vollkorrektion ist eine Gleichheit der Vergenzmatrix $S_{SK}$ der Wellenfront an der Scheitelpunktkugel im Gebrauchsstrahlengang mit der entsprechenden Matrix $S_{Ref}$ aus der Refraktion. Eine Vollkorrektion in allen Bewertungsstellen eines Brillenglases gleichzeitig ist aber im allgemeinen nicht möglich. Zu minimieren ist also die Differenz-Vergenzmatrix $S_\Delta = S_{SK} - S_{Ref}$ des Refraktionsdefizits, was gleichbedeutend mit einer Minimierung ihres sphärischen Äquivalents $S_\Delta$ und ihres Zylinders $Z_\Delta$ ist (diese entsprechen dem Mittelwert bzw. Differenzbetrag der Eigenwerte der Differenz-Vergenzmatrix $S_\Delta$). Es hat sich für die Stabilität der Optimierung als vorteilhaft erwiesen, endliche Werte $S_{\Delta,Soll}$ und $Z_{\Delta,Soll}$ von $S_\Delta$ und $Z_\Delta$ bereits als Zielvorgabe festzulegen (die sog. Sollvorgaben), so dass die Optimierung auf die Minimierung folgender (monokularer) Zielfunktion gerichtet ist:

$$F_{\text{mono}} = \sum_i g_Z(i)(Z_\Delta(i) - Z_{\Delta,\text{Soll}}(i))^2 + g_S(i)(S_\Delta(i) - S_{\Delta,\text{Soll}}(i))^2 \qquad (1)$$

Dabei läuft die Summe vorzugsweise über die mehr als 10000 Bewertungsstellen $i$ des zu optimierenden Brillenglases, wobei $g_Z(i)$ und $g_S(i)$ lokale Gewichte bzw. Gewichtungsfaktoren bezeichnen.

Gemäß einer bevorzugten Ausführungsform der Erfindung werden nun $K$ ($K \geq 1$ ist eine ganze Zahl) binokulare Eigenschaften $Bin^{(k)}$, $k=1,...,K$ festgelegt (die im folgenden anhand bevorzugten Ausführungsformen noch spezifiziert werden), so wird als Zielfunktion für einen binokularen Berechungs- bzw. Optimierungsschritt zumindest einer Fläche eines ersten Brillenglases vorzugsweise die Funktion

$$F = g^r F_{\text{mono}}^r + g^l F_{\text{mono}}^l + g^{\text{bino}} F_{\text{bino}} \qquad (2)$$

wobei $g^{(1)} = g^r$, $g^{(2)} = g^l$ und $g^{\text{bino}}$ Gewichte bzw. Gewichtungsfaktoren und $F_{\text{mono}}^{(1)} = F_{\text{mono}}^r$ und $F_{\text{mono}}^{(2)} = F_{\text{mono}}^l$ eine erste bzw. rechte und eine zweite bzw. linke monokulare Funktion bezeichnen. Vorzugsweise nach werden die monokularen Funktionen analog zu Gl. (1) bereitgestellt, also insbesondere:

$$
\begin{aligned}
F_{\text{mono}}^r &= \sum_{i_r \in G_r} g_{Z,r}(i_r)(Z_\Delta(i_r) - Z_{\Delta,\text{Soll}}(i_r))^2 + g_{S,r}(i_r)(S_\Delta(i_r) - S_{\Delta,\text{Soll}}(i_r))^2 \\
F_{\text{mono}}^l &= \sum_{i_l \in G_l} g_{Z,l}(i_l)(Z_\Delta(i_l) - Z_{\Delta,\text{Soll}}(i_l))^2 + g_{S,l}(i_l)(S_\Delta(i_l) - S_{\Delta,\text{Soll}}(i_l))^2
\end{aligned}
\qquad (3)
$$

Die Auswertung der beiden monokularen Funktionen in Gl.(3) erfolgt unabhängig voneinander, wobei der Index $i_r$ in $F_{\text{mono}}^r$ über alle Bewertungsstellen im rechten Glas ($i_r \in G_r$) und der Index $i_l$ in $F_{\text{mono}}^l$ über alle Stellen im linken Glas ($i_l \in G_l$) läuft.

In einer bevorzugten Ausführungsform wird die binokulare Funktion durch

$$F_{\text{bino}} = \sum_k \left( \begin{array}{l} \displaystyle\sum_{i_r \in GBr} g_{\text{Bin}}^{(k)}(i_r)(Bin^{(k)}(i_r) - Bin_{\text{Soll}}^{(k)}(i_r))^2 \\[2ex] + \displaystyle\sum_{\substack{i_r \in G_r \\ i_r \notin GB_r}} g_{\text{Bin}}^{(k)}(i_r)(Bin^{(k)}(i_r) - Bin_{\text{Soll}}^{(k)}(i_r))^2 \\[2ex] + \displaystyle\sum_{\substack{i_l \in G_l \\ i_l \notin GB_l}} g_{\text{Bin}}^{(k)}(i_l)(Bin^{(k)}(i_l) - Bin_{\text{Soll}}^{(k)}(i_l))^2 \end{array} \right) \qquad (4)$$

festgelegt, wobei der Index $k$ über alle zu berücksichtigenden binokulare Eigenschaften läuft und die Indizes $i_r$, $i_l$ über alle Bewertungsstellen. Die Größen $Bin^{(k)}$ sind binokulare Eigenschaften (s.u. sowie Tab.2), und $Bin_{\text{Soll}}^{(k)}$ sind deren Sollvorgaben bzw. lokale Sollwerte. Weiter sind die $g_{\text{Bin}}^{(k)}$ lokale binokulare Gewichtsfunktionen in Abhängigkeit der Bewertungsstellen. In den Bezeichnungen $g_{\text{Bin}}^{(k)}(i_l)$, $Bin^{(k)}(i_l)$, $Bin_{\text{Soll}}^{(k)}(i_l)$ steht das Argument $(i_l)$ insbesondere als Abkürzung für das Punktepaar $(\mathbf{P}_l(i_l), \mathbf{P}_r(i_l))$ aus einem Punkt $\mathbf{P}_1$ auf dem linken Glas und einem Punkt $\mathbf{P}_r$ auf dem rechten Glas, wobei aber beide Punkte durch den linken Index $i_l$ festgelegt sein können. Entsprechend steht das Argument $(i_r)$ insbesondere als Abkürzung für ein solches Punktepaar $(\mathbf{P}_1(i_r), \mathbf{P}_r(i_r))$, das bereits allein durch den rechten Index $i_r$ festgelegt sein kann. Wahlweise können die Punkte beispielsweise auf der Vorderfläche oder der Rückfläche liegen.

Das Punktepaar $(\mathbf{P}_1, \mathbf{P}_r)$ bezeichnet dabei die Stellen auf dem jeweiligen Brillenglas fest, für die insbesondere in beiden Gläsern monokulare Eigenschaften verglichen werden sollen. Auf den Gläsern sind nun insbesondere verschiedene Gebiete zu unterscheiden:

a) das binokular durchrechenbare Gebiet $GB_r$ bzw. $GB_l$: Jedes Punktepaar $(\mathbf{P}_l, \mathbf{P}_r)$, für das $\mathbf{P}_l$ der Durchstoßpunkt des linken Hauptstrahls auf dem linken Glas und $\mathbf{P}_r$ der Durchstoßpunkt des rechten Hauptstrahls auf dem rechten Glas ist, wobei beide Hauptstrahlen dadurch charakterisiert sind, dass sie sich im Objektraum auf einer vorzugebenden Objektfläche schneiden, heißt korrespondierendes Punktepaar. Dasjenige Gebiet mit Punkten $\mathbf{P}_l$ auf dem linken Glas, für welche sich ein korrespondierender Punkt $\mathbf{P}_r$ auf dem rechten Glas finden lässt, wird dabei das binokular durchrechenbare Gebiet $GB_l$ des linken Glases genannt. Das entsprechende Gebiet im rechten Glas wird das binokular durchrechenbare Gebiet $GB_r$ des rechten Glases genannt. Die diskrete Menge an Gitterindizes $i_l$, $i_r$, für welche die Punkte $\mathbf{P}_l(il)$ bzw. $\mathbf{P}_r(ir)$ in $GB_l$ bzw. $GB_r$ liegen, werden hierbei ebenfalls mit $GB_l$ bzw. $GB_r$ bezeichnet.
b) Das nicht binokular durchrechenbare Gebiet im linken Glas, also $i_l \in G_l$, aber $i_l \notin GB_l$
c) Das nicht binokular durchrechenbare Gebiet im rechten Glas, also $i_r \in G_r$, aber $i_r \notin GB_r$

Die erste Summation in GI.(4) bezieht sich nun auf Punkte im binokular durchrechenbaren Gebiet a). Vorzugsweise wird zunächst der rechte Index $i_r$ vorgegeben und dazu $\mathbf{P}_r$ bestimmt und der zugehörige Punkt auf der Objektfläche bestimmt. Anschließend wird daraus in einer Hauptstrahliteration ein zweiter Hauptstrahl und $\mathbf{P}_l$ berechnet, womit das Punktepaar $(\mathbf{P}_l(i_r), \mathbf{P}_r(i_r))$ in Abhängigkeit von $i_r$ festgelegt ist. Alternativ kann analog dazu das Punktepaar $(\mathbf{P}_l(il), \mathbf{P}_r(il))$ auch in Abhängigkeit vom linken Index $il$ bestimmt werden. In beiden Fällen überstreicht die Summation in GI.(4) das gesamte binokular durchrechenbare Gebiet. Ohne Beschränkung der Allgemeinheit wird daher im Folgenden die erste Summation durch $ir \in GBr$ ausgedrückt.

Die zweite Summation in GI.(4) bezieht sich nun auf Punkte im nicht binokular durchrechenbaren Gebiet des linken Glases, Gebiet b). Dieser Beitrag zur binokularen Funktion betrifft zwar nicht unmittelbar binokulares Sehen, ist aber vorteilhaft, um für die Verträglichkeit des Brillenglases bzw. der Brillengläser einen besonders vorteilhaften Übergang der Zielfunktion am Rand des Binokulargebietes zu bewirken. Vorzugsweise wird zu gegebenem Index $i_r$ der Punkt $\mathbf{P}_l(il)$ bestimmt, und hierzu wird statt des korrespondierenden Punktes (der ja nicht existiert) derjenige Punkt $\mathbf{P}_r(i_l)$ ausgewählt, der zu $\mathbf{P}_l(i_l)$ horizontalsymmetrisch liegt.

Die dritte Summation in GI.(4) bezieht sich schließlich auf Punkte im nicht binokular durchrechenbaren Gebiet c) des rechten Glases, die durch den Index $i_r$ abgezählt werden.

Die binokularen Eigenschaften $Bin^{(k)}(i)$ (wobei stellvertretend für $i_l$, $i_r$ im Folgenden der Index $i$ verwendet wird) werden gemäß einer bevorzugten Ausführungsform folgendermaßen definiert: zu der Bewertungsstelle $i$ werden an den beiden Punkten $\mathbf{P}_l(i)$, $\mathbf{P}_r(i)$ je $Q$ ($Q \geq 1$ ist eine ganze Zahl) die Werte der monokularen optischen Eigenschaft

$$Mon_r^{(q)}(i) := Mon_r^{(q)}(\mathbf{P}_r(i)), \quad Mon_l^{(q)}(i) := Mon_l^{(q)}(\mathbf{P}_l(i)), \quad q=1,...,Q \text{ berechnet. Als binokulare optische}$$

Eigenschaft $Bin^{(k)}(i)$ wird dann vorzugsweise eine Funktion

$$Bin^{(k)}(i) = f^{(k)}\big(Mon_r^{(1)}(i), Mon_r^{(2)}(i),..., Mon_r^{(Q)}(i), \\ Mon_l^{(1)}(i), Mon_l^{(2)}(i),..., Mon_l^{(Q)}(i)\big) \tag{5}$$

dieser monokularen Eigenschaften festgelegt, die mindestens eine monokulare Eigenschaft von jeder Seite mit einbezieht, die also von mindestens einer der $Mon_r^{(q)}(i)$ und von mindestens einer der $Mon_l^{(q)}(i)$ echt abhängt. Die Funktion $f^{(k)}$ kann, muss aber nicht notwendig die Differenz aus zwei monokularen Eigenschaften sein, z.B.

$$Bin^{(k)}(i) = Mon_l^{(1)}(i) - Mon_r^{(1)}(i)$$

Vorzugsweise ist die binokulare optische Eigenschaft $Bin^{(k)}$ eine der Größen, die sich aus den linken und rechten Ergebnissen der Matrix $\mathbf{S}_\Delta$ des monokularen Refraktionsdefizits, der monokularen Vergrößerungsmatrix $\mathbf{N}$ und/oder dem monokularen Prisma Pr bilden lässt.

Mit der bevorzugten Parametrisierung

$$\mathbf{S}_\Delta = \begin{pmatrix} S_{xx} & S_{xy} \\ S_{xy} & S_{yy} \end{pmatrix}, \mathbf{N} = \begin{pmatrix} N_{xx} & N_{xy} \\ N_{xy} & N_{yy} \end{pmatrix}, \mathbf{Pr} = \begin{pmatrix} \mathrm{Pr}_h \\ \mathrm{Pr}_v \end{pmatrix} \qquad (6)$$

zeigt Tab. 1 neue beispielhafte bevorzugte monokulare optische Eigenschaften, die als zumindest eine erste, zweite und/oder dritte monokulare optische Eigenschaften in die Zielfunktion eingehen können.

| q | Formel | Bezeichnung |
|---|--------|-------------|
| 1 | $Mon_r^{(1)} = S_{\Delta,r} = \frac{1}{2}(S_{xx,r} + S_{yy,r})$ | Sphärisches Äquivalent des monokularen Refraktionsdefizits |
| 2 | $Mon_r^{(2)} = Z_{\Delta,r} = \sqrt{(S_{xx,r} - S_{yy,r})^2 + 4S_{xy,r}^2}$ | Zylinder des monokularen Refraktionsdefizits |
| 3 | $Mon_r^{(3)} = \alpha_{\Delta,r} = \frac{1}{2}\arctan\dfrac{2S_{xy,r}}{S_{x,r} + S_{y,r}}$ | Achslage des monokularen Refraktionsdefizits |
| 4 | $Mon_r^{(4)} = N_r = \frac{1}{2}\sqrt{(N_{xy,r} - N_{yx,r})^2 + (N_{xx,r} + N_{yy,r})^2}$ | Mittlere monokulare Vergrößerung |
| 5 | $Mon_r^{(5)} = Z_r = \frac{1}{2}\sqrt{(N_{xy,r} + N_{yx,r})^2 + (N_{xx,r} - N_{yy,r})^2}$ | Mittlere monokulare Verzerrung |
| 6 | $Mon_r^{(6)} = \psi_{N,r}$ $= \frac{1}{2}\arctan\dfrac{2(N_{xx,r}N_{xy,r} + N_{yx,r}N_{yy,r})}{N_{xx,r}^2 - N_{xy,r}^2 + N_{yx,r}^2 - N_{yy,r}^2}$ | Monokulare Hauptvergrößerungsrichtung |
| 7 | $Mon_r^{(7)} = \psi_{T,r} = \arctan\dfrac{N_{xy,r} - N_{yx,r}}{N_{xx,r} + N_{yy,r}}$ | Monokularer Torsionswinkel |
| 8 | $Mon_r^{(8)} = \mathrm{Pr}_{h,r}$ | Monokulares Horizontalprisma |
| 9 | $Mon_r^{(9)} = \mathrm{Pr}_{v,r}$ | Monokulares Vertikalprisma |

Das sphärische Äquivalent $S_\Delta$ entspricht dabei dem Mittelwert der Eigenwerte von $\mathbf{S}_\Delta$. Der Wert $Z_\Delta$ des Zylinders entspricht damit dem Differenzbetrag der Eigenwerte von $\mathbf{S}_\Delta$. Der Winkel $\alpha_\Delta$ repräsentiert die Richtung eines der Eigenvektoren von $\mathbf{S}_\Delta$. Insbesondere sind über $S_\Delta$, $Z_\Delta$ und $\alpha_\Delta$ die drei Freiheitsgrade der symmetrischen Matrix $\mathbf{S}_\Delta$ vollständig charakterisiert. Die Vergrößerungsmatrix $\mathbf{N}$ ist i.a. asymmetrisch und besitzt daher einen Freiheitsgrad mehr als die symmetrische Matrix $\mathbf{S}_\Delta$. Der Torsionswinkel ist insbesondere so definiert, dass das Produkt $\mathbf{R}(\psi_T)\mathbf{N}$ mit der Rotationsmatrix $\mathbf{R}(\psi_T) = ((\cos\psi_T, -\sin\psi_T), (\sin\psi_T, \cos\psi_T))$ symmetrisch ist. Mit diesem Produkt wird dann so verfahren wie mit $\mathbf{S}_\Delta$, d.h. $N$ ist der Mittelwert der Eigenwerte von $\mathbf{R}(\psi_T)\mathbf{N}$, $Z$ ist deren Differenzbetrag und $\psi_N$ die Richtung eines der Eigenvektoren von $\mathbf{R}(\psi_T)\mathbf{N}^*$.

Im Folgenden ist eine Reihe bevorzugter binokularer Funktionen $Bin^{(k)}$ dargestellt. Diese lassen sich insbesondere als Funktionen (d.h. in Abhängigkeit) von Werten der oben beschriebenen bevorzugten monokularen Funktionen $Mon^{(q)}$ darstellen, wobei der Index $q$ lediglich zur Bezugnahme auf die oben beispielhaft gewählte Nummerierung der monokularen Funktionen dient und darüber hinaus keine beschränkende Bedeutung hat. Insbesondere ist darunter keine für die Erfindung erforderliche Reihenfolge oder Gewichtung der monokularen Funktionen zu verstehen.

Es hat sich als praktisch erwiesen, die binokularen Links-Rechts-Differenzen nicht nur eigenschaftsweise nach Tab.1 zu bilden, sondern auch durch bestimmte Kombinationen dieser Eigenschaften, die sich einfach interpretieren lassen. Berechnet man die durch die ersten drei Eigenschaften bestimmten Matrizen $\mathbf{S}_{\Delta,r}$ und $\mathbf{S}_{\Delta,l}$ für das Refraktions-defizit in den Bewertungsstellen $\mathbf{P}_r(i)$ bzw. $\mathbf{P}_1(i)$, dann kann man daraus die binokulare Differenzmatrix $\Delta\mathbf{S}_{\Delta}=\mathbf{S}_{\Delta,1}-\mathbf{S}_{\Delta,r}$ des Refraktionsdefizits bilden und daraus wiederum Größen $S_{\Delta,lr}$, $Z_{\Delta,lr}$, $\alpha_{\Delta,lr}$ analog zu $S_{\Delta}$, $Z_{\Delta}$, $\alpha_{\Delta}$ berechnen (siehe $B_{in}^{(1)}$ bis $Bin^{(3)}$ in Tab. 2). In einer anderen bevorzugten Ausführungsform werden die kleineren oder die größeren Hauptschnitte einem Links-Rechts-Vergleich unterzogen ($Bin^{(4)}$ bzw. $Bin^{(5)}$). In einer weiteren bevorzugten Ausführungsform wird die Norm der Differenzmatrix $\Delta\mathbf{S}_{\Delta}$ gebildet ($Bin^{(6)}$) und/oder die Zylinderwerte und/oder die Achslagen direkt verglichen ($Bin^{(7)}$ bzw. $Bin^{(8)}$). Ein direkter Vergleich der sphärischen Äquivalente (manchmal auch als "Refraktionsungleichgewicht" bezeichnet) wird schon durch $Bin^{(1)}$ dargestellt.

Um die linke und die rechte Vergrößerungsmatrix zu vergleichen, gibt es wegen deren Asymmetrien noch mehr Möglichkeiten. Besonders bevorzugt ist die direkte Differenzbildung von Vergrößerung, Verzerrung, Hauptvergrößerungsrichtung und/oder Torsion ($Bin^{(9)}$ bis $Bin^{(12)}$). Alternativ oder zusätzlich werden vorzugsweise die symmetrischen Anteile beider Vergrößerungsmatrizen ermittelt, daraus die Differenzmatrix $\mathbf{R}(\psi_{T,1})\mathbf{N}_1-\mathbf{R}(\psi_{T,r})\mathbf{N}_r$ gebildet, und aus jener dann analog zu $\Delta\mathbf{S}_{\Delta}$ der Mittelwert der Eigenwerte, deren Differenzbetrag und/oder die Hauptrichtung gebildet und in der binokularen Funktion berücksichtigte. Der Mittelwert der Eigenwerte ist bereits durch $Bin^{(9)}$ gegeben, die beiden anderen Größen entsprechen $Bin^{(13)}$ und $Bin^{(14)}$. Analog zu $Bin^{(6)}$ wird in einer anderen bevorzugten Ausführungsform die Norm der Differenzmatrix $\mathbf{N}_1-\mathbf{N}_r$ gebildet ($Bin^{(15)}$).

In einer weiteren bevorzugten Ausführungsform wird durch

$$\mathbf{N}^Q = \mathbf{N}_l\mathbf{N}_r^{-1} = \begin{pmatrix} N_{xx}^Q & N_{xy}^Q \\ N_{yx}^Q & N_{yy}^Q \end{pmatrix}, \qquad (7)$$

die Vergrößerungsquotientenmatrix gebildet, um die linke und die rechte Vergrößerungsmatrix zu vergleichen. Die Vergrößerungsquotientenmatrix ist gleich der Einheitsmatrix, wenn beide Vergrößerungsmatrizen identisch sind. Zur Vergrößerungsquotientenmatrix $\mathbf{N}^Q$ werden vorzugsweise analog zu $\mathbf{N}$ Vergrößerung, Verzerrung, Lage der Hauptvergrößerungsrichtung und/oder Torsion ermittelt ($Bin^{(16)}$ bis $Bin^{(19)}$) und entsprechend in der binokularen Funktion be-rücksichtigt. Sind beide Vergrößerungsmatrizen $\mathbf{N}_1$ und $\mathbf{N}_r$ gleich, dann ist $\mathbf{N}^Q=\mathbf{1}$ die Einheitsmatrix, und deren Vergrößerung ist 1, die Verzerrung 0, die Hauptrichtung undefiniert, und die Torsion 0.

In einer weiteren bevorzugten Ausführungsform werden alternativ oder zusätzlich aus den Prismen der monokularen optischen Eigenschaften die horizontale Vergenzstellung und/oder die vertikale Prismendifferenz ($Bin^{(20)}$ bis $Bin^{(21)}$) als binokulare optische Eigenschaften in der binokularen Funktion berücksichtigt. Damit lässt sich in besonders vorteilhafter Weise ein Brillenglas bzw. ein Brillenglaspaar zu Verwendung in einer Brille zur Korrektur von Anisometropie insbesondere unter Berücksichtigung der Anisometropie optimieren bzw. herstellen.

**Tab. 2:** Binokulare Größen, die gemäß bevorzugten Ausführungsformen in der binokularen Funktion alternativ oder in Kombination berücksichtigt werden.

| Formel | $Mon_{rechts}^{(q)}$, $Mon_{links}^{(q)}$ | Bezeichnung |
|---|---|---|
| $Bin^{(1)} = S_{\Delta,lr} = S_{\Delta,l} - S_{\Delta,r}$ | q=1 | Sphärisches Aquivalent des binokularen Refraktionsungleichgewichts |
| $Bin^{(2)} = Z_{\Delta,lr} = \sqrt{\begin{array}{c} Z_{\Delta,l}^2 + Z_{\Delta,r}^2 - \\ 2Z_{\Delta,l}Z_{\Delta,r}\cos 2(\alpha_{\Delta,l} - \alpha_{\Delta,r}) \end{array}}$ | q=2,3 | Zylinder des binokularen Refraktionsungleichgewichts (astigmatische Differenz) |

(fortgesetzt)

| Formel | $Mon^{(q)}_{rechts}$ , $Mon^{(q)}_{links}$ | Bezeichnung |
|---|---|---|
| $Bin^{(3)} = \alpha_{\Delta,lr}$ $= \dfrac{1}{2}\arctan\dfrac{Z_{\Delta,l}\sin 2\alpha_{\Delta,l} - Z_{\Delta,r}\sin 2\alpha_{\Delta,r}}{Z_{\Delta,l}\cos 2\alpha_{\Delta,l} - Z_{\Delta,r}\cos 2\alpha_{\Delta,r}}$ | $q=2,3$ | Achslage des binokularen Refraktionsungleichgewichts |
| $Bin^{(4)} = S^{-}_{\Delta,lr} = (S_{\Delta,l} - \tfrac{1}{2}Z_{\Delta,l}) - (S_{\Delta,r} - \tfrac{1}{2}Z_{\Delta,r})$ | $q=1,2$ | Binokulares Ungleichgewicht im kleineren Hauptschnitt |
| $Bin^{(5)} = S^{+}_{\Delta,lr} = (S_{\Delta,l} + \tfrac{1}{2}Z_{\Delta,l}) - (S_{\Delta,r} + \tfrac{1}{2}Z_{\Delta,r})$ | $q=1,2$ | Binokulares Ungleichgewicht im größeren Hauptschnitt |
| $Bin^{(6)} = A_{\Delta,lr}$ $= \sqrt{\dfrac{(S_{xx,l} - S_{xx,r})^2 + (S_{yy,l} - S_{yy,r})^2}{+ 2(S_{xy,l} - S_{xy,r})^2}}$ | $q=1,2,3$ | Binokularer dioptrischer Abstand zwischen linkem und rechtem Refraktionsdefizit |
| $Bin^{(7)} = \Delta Z_{\Delta} = \lvert Z_{\Delta,l} - Z_{\Delta,r}\rvert$ | $q=2$ | Betrag der binokularen Zylinderdifferenz |
| $Bin^{(8)} = \Delta\alpha_{\Delta} = \alpha_{\Delta,l} - \alpha_{\Delta,r}$ | $q=3$ | Binokulare Achslagendifferenz |
| $Bin^{(9)} = \Delta N = N_l - N_r$ | $q=4$ | Binokulare Vergrößerungsdifferenz |
| $Bin^{(10)} = \Delta Z = Z_l - Z_r$ | $q=5$ | Binokulare Verzerrungsdifferenz |
| $Bin^{(11)} = \Delta\psi_N = \psi_{N,l} - \psi_{N,r}$ | $q=6$ | Binokulare Differenz der Hauptvergrößerungsrichtungen |
| $Bin^{(12)} = \Delta\psi_T = \psi_{T,l} - \psi_{T,r}$ | $q=7$ | Binokulare Torsionsdifferenz |
| $Bin^{(13)} = Z_{lr} = \sqrt{Z_l^2 + Z_r^2 - 2Z_l Z_r \cos 2(\psi_{N,l} - \psi_{N,r})}$ | $q=5,6$ | Verzerrung der binokularen Differenz $\mathbf{R}(\psi_{T,1})\mathbf{N}_1 - \mathbf{R}(\psi_{T,r})\mathbf{N}_r$ der symmetrischen Anteile der Vergrößerungsmatrizen |
| $Bin^{(14)} = \psi_{N,lr}$ $= \dfrac{1}{2}\arctan\dfrac{Z_l\sin 2\psi_{N,l} - Z_r\sin 2\psi_{N,r}}{Z_l\cos 2\psi_{N,l} - Z_r\cos 2\psi_{N,r}}$ | $q=5,6$ | Hauptrichtung der binokularen Differenz $\mathbf{R}(\psi_{T,1})\mathbf{N}_1 - \mathbf{R}(\psi_{T,r})\mathbf{N}_r$ der symmetrischen Anteile der Vergrößerungsmatrizen |
| $Bin^{(15)} = A_{N,lr}$ $= \sqrt{\dfrac{(N_{xx,l} - N_{xx,r})^2 + (N_{yy,l} - N_{yy,r})^2}{+ 2(N_{xy,l} - N_{xy,r})^2}}$ | $q=4,5,6,7$ | Binokulare Differenznorm zwischen linker und rechter Vergrößerungsmatrix |

(fortgesetzt)

| Formel | $Mon^{(q)}_{\text{rechts}}$, $Mon^{(q)}_{\text{links}}$ | Bezeichnung |
|---|---|---|
| $Bin^{(16)} = N^{Q}$ $= \frac{1}{2}\sqrt{(N^{Q}_{xy} - N^{Q}_{yx})^2 + (N^{Q}_{xx} + N^{Q}_{yy})^2}$ | $q = 4,5,6$ | Vergrößerung der Vergrößerungsquotientenmatrix |
| $Bin^{(17)} = Z^{Q}$ $= \frac{1}{2}\sqrt{(N^{Q}_{xy} + N^{Q}_{yx})^2 + (N^{Q}_{xx} - N^{Q}_{yy})^2}$ | $q = 4,5,6$ | Verzerrung der Vergrößerungsquotientenmatrix |
| $Bin^{(18)} = \psi^{Q}_{N}$ $= \frac{1}{2}\arctan\frac{2(N^{Q}_{xx}N^{Q}_{xy} + N^{Q}_{yx}N^{Q}_{yy})}{(N^{Q}_{xx})^2 - (N^{Q}_{xy})^2 + (N^{Q}_{yx})^2 - (N^{Q}_{yy})^2}$ | $q = 4,5,6,7$ | Hauptvergrößerungsrichtung der Vergrößerungsquotientenmatrix |
| $Bin^{(19)} = \psi^{Q}_{T} = \arctan\frac{N^{Q}_{xy} - N^{Q}_{yx}}{N^{Q}_{xx} + N^{Q}_{yy}}$ | $q = 4,5,6,7$ | Torsion der Vergrößerungsquotientenmatrix |
| $Bin^{(20)} = \Delta\text{Pr} = \text{Pr}_{h,l} - \text{Pr}_{h,r}$ | $q=8$ | Horizontale Prismendifferenz, horizontale Vergenzstellung |
| $Bin^{(21)} = \Delta\text{Pr} = \text{Pr}_{v,l} - \text{Pr}_{v,r}$ | $q=9$ | Vertikale Prismendifferenz |

In einer bevorzugten Ausführungsform wird der binokulare Berechnungs- bzw. Optimierungsschritt derart ausgeführt, dass das erste und/oder zweite Brillenglas (d.h. wahlweise die Vorder- und/oder die Rückfläche) durch $n_1$ Spline-Koeffizienten im linken Glas und $n_r$ Spline-Koeffizienten im rechten Glas festgelegt werden, wobei das Spline-Gitter an den Bewertungsstellen liegen kann, aber nicht muss.

Vorzugsweise wird Startzustand für jedes Glas (insbesondere für jedes Glas, das bei der binokularen Optimierung variiert wird) von einem monokular günstigen Zustand auszugehen. Insbesondere eignet sich dazu ein Glas, welches zuvor monokular nach der Zielfunktion in Gl.(1) optimiert wurde.

In einer bevorzugten Ausführungsform umfasst der binokulare Berechnungs- bzw. Optimierungsschritt eine einseitige binokulare Optimierung. Dies ist besonders bevorzugt, wenn ein Auge durch den Brillenträger bevorzugt wird (ein Führungsauge). Dabei wird vorzugsweise nur das Glas auf der anderen Seite verändert und in Kauf genommen, dass sich dessen monokulare Eigenschaften verschlechtern, wenn dadurch die binokularen Eigenschaften verbessert werden können. Hierbei werden beispielhaft die $n_1$ Koeffizienten des linken Glases festgehalten, während die $n_r$ Koeffizienten des rechten Glases so verändert werden, dass dabei die Zielfunktion in Gl.(2) minimiert wird.

Da bei einer einseitigen Optimierung des rechten Glases der Beitrag der linksseitigen monokularen Zielfunktion $F^{l}_{\text{mono}}$ $F$ in Gl.(2) konstant ist, kann er auch fortgelassen werden, so dass statt Gl.(2) nach der Zielfunktion

$$F = g^{r}F^{r}_{\text{mono}} + g^{\text{bino}}F_{\text{bino}} \qquad (8)$$

optimiert werden kann, ohne das Ergebnis für die Gläser zu verändern.

In einer weiteren bevorzugten Ausführungsform wird anstelle der binokularen Funktion aus Gl.(4) als binokulare Funktion

$$F_{\text{bino}} = \sum_k \left( \begin{array}{c} \sum\limits_{i_r \in GB_r} g_{\text{Bin}}^{(k)}(i_r)(Bin^{(k)}(i_r) - Bin_{\text{Soll}}^{(k)}(i_r))^2 \\ + \sum\limits_{\substack{i_r \in G_r \\ i_r \notin GB_r}} g_{\text{Bin}}^{(k)}(i_r)(Bin^{(k)}(i_r) - Bin_{\text{Soll}}^{(k)}(i_r))^2 \end{array} \right) \qquad (9)$$

in der Zielfunktion von Gl.(8) oder Gl.(2) verwendet.

In einer weiteren bevorzugten Ausführungsform der vorliegenden Erfindung umfasst der binokulare Berechnungs- bzw. Optimierungsschritt eine beidseitige simultane binokulare Optimierung ohne Nebenbedingungen. Insbesondere werden dabei in der nach Gl.(2) erfolgenden binokularen Optimierung alle $n_1 + n_r$ Spline-Koeffizienten simultan verändert, wobei vorzugsweise ein Newton-Suchalgorithmus (oder ein anderes Verfahren) verwendet wird um die Zielfunktion zu minimieren. Der Bezeichnung "ohne Nebenbedingungen" soll hierbei bedeuten, dass wirklich alle $n_1 + n_r$ Spline-Koeffizienten unabhängig voneinander sind. Dies ist insbesondere dann vorteilhaft, wenn die beiden Brillengläser verschieden sind, wie z.B. bei Anisometropie. Bei Isometropie kann eine unabhängige Optimierung beider Gläser z.B. dazu benutzt werden, durch verschiedene Gewichte bestimmte monokulare Eigenschaften auf einer Seite anders zu behandeln als auf der anderen Seite. Für die beidseitige simultane binokulare Optimierung ohne Nebenbedingungen eignen sich die Abwandlungen der Zielfunktionen aus Gl.(8) und (9) nicht, weil beide Gläser variiert werden.

In einer weiteren bevorzugten Ausführungsform der vorliegenden Erfindung umfasst der binokulare Berechnungs- bzw. Optimierungsschritt eine beidseitige simultane binokulare Optimierung mit Nebenbedingungen. Insbesondere werden in einer bevorzugten Ausführungsform das linke und rechte Brillenglas spiegelsymmetrisch optimiert bzw. hergestellt. In diesem Fall ist vorzugsweise $n_1 = n_r$, und die Spline-Koeffizienten des linken Glases sind mit jenen des rechten Glases identisch. Vorzugsweise werden auch die linken monokularen Sollvorgaben bzw. Sollwerte und Gewichte mit den rechten gleichgesetzt. In der Zielfunktion in Gl.(2) ist dann $F_{\text{mono}}^l = F_{\text{mono}}^r$, und in der binokularen Zielfunktion in Gl.(4) sind die zweite und die dritte Teilsumme identisch. In diesem speziellen Fall verändern alle beiden Abwandlungen der Zielfunktionen nach Gln.(8) und Gln.(9) das Ergebnis gegenüber Gln.(2,4) nicht. Aus Symmetriegründen, d.h. wegen $g^l F_{\text{mono}}^l$ und wegen der Gleichheit der zweiten und dritten Summation in Gl.(4), sind diese Abwandlungen dann nämlich äquivalent zu den ursprünglichen Zielfunktionen in Gln.(2,4), wenn man in Gl.(2) $g^l \to g^l / 2$, $g^r \to g^r / 2$ und in **Gl.(4)** $g_{\text{Bin}}^{(k)}(i_r) \to g_{\text{Bin}}^{(k)}(i_r)/2$ für $i_r \notin GB_r$ setzt. Als Startzustand für die binokulare Optimierung mit ebenbedingungen wird vorzugsweise ein einziges monokular günstiges bzw. optimiertes Glas bereitzustellen. Insbesondere eignet sich ein nach Gl.(1) monokular optimiertes Glas.

In einer weiteren bevorzugten Ausführungsform der vorliegenden Erfindung umfasst der binokulare Berechnungs- bzw. Optimierungsschritt eine beidseitige sequentielle binokulare Optimierung. Damit lassen sich beide Brillengläser optimieren, wobei für den Berechungs- bzw. Optimierungsschritt die hohe Zahl von Freiheitsgraden des Optimierungsproblems zu reduzieren, indem man ersatzweise abwechselnd links und rechts eine einseitige binokulare Optimierung nach der Zielfunktion in Gl.(2) und in Gl.(4) durchführt. Jeder einseitige Optimierungsprozess, d.h. jede Sequenz, kann dabei entweder solange laufen, bis sich der Wert der Zielfunktion bei dieser Sequenz nicht mehr ändert, oder vorzeitig abgebrochen werden, wenn beispielsweise die Änderungen unter einen bestimmtes Abbruchkriterium fallen. Durch die Reduzierung der freien Parameter kann der Berechnung bzw. Optimierung und Herstellung deutlich beschleunigt werden.

Vorzugsweise wird der Wechsel von links- und rechtsseitiger Optimierung solange fortgesetzt, bis sich am Ergebnis nichts mehr ändert. Dieses Endergebnis unterscheidet sich zwar von jenem der beidseitige simultanen binokulare Optimierung ohne Nebenbedingungen, stellt aber bei geeigneter Wahl der Schrittzahlen für die einzelnen Sequenzen eine gute Näherung dar. Vorzugsweise umfasst das Verfahren dabei einen Schritt des Bestimmens bzw. Festlegens eines Führungsauges. Besonders bevorzugt wird die sequentielle Optimierung dann mit einem Modifizieren bzw. binokularen Optimieren desjenigen Brillenglases begonnen das dem Führungsauge abgewandten ist. Insbesondere sind die Veränderungen im ersten Optimierungsschritt der Sequenz am stärksten. Die Abänderung des Führungsauges gegenüber dem monokularen Optimum findet dann erst in der zweiten Sequenz statt und ist entsprechend geringer.

In einer weiteren bevorzugten Ausführungsform der vorliegenden Erfindung umfasst der binokulare Berechnungs- bzw. Optimierungsschritt eine beidseitige sequentielle binokulare Optimierung mit abgewandelter Zielfunktion. Dabei wird analog zur einseitigen binokularen Optimierung die Zielfunktion gemäß Gln.(8,9) abgewandelt.

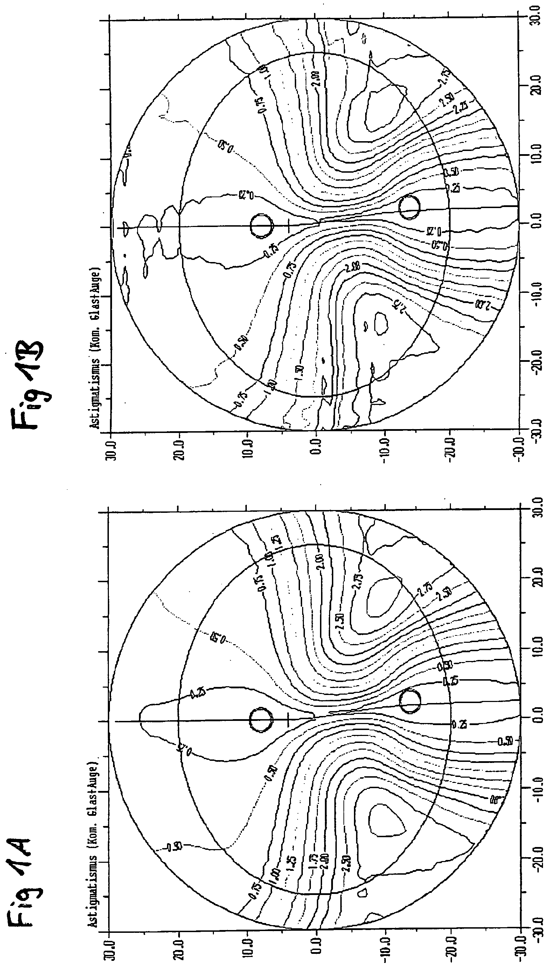

Figuren 1A bis 3B zeigen ein Beispiel einer beidseitigen simultanen binokularen Optimierung mit Nebenbedingung. Diese Figuren 1 bis 8 sind auf ein kartesisches Koordinatensystem bezogen, das tangential zur Vorderfläche des ersten Brillenglases liegt und dessen Ursprung sich vorzugsweise in Nullblickrichtung vor dem entsprechenden Auge befindet. Die x-y-Ebene ist vorzugsweise tangential zur Vorderfläche im Prismenbezugspunkt bzw. geometrischen Mittelpunkt; alle Koordinatenwerte x und y sind in mm angegeben. Die einzelnen Figuren zeigen dabei Isolinien der dargestellten Größen.

Insbesondere handelt es sich hierbei um eine Optimierung bzw. Herstellung eines progressiven Brillenglaspaares für die Anwendung bei Isometropie. Insbesondere handelt es sich dabei um ein Minusglas mit der Verordnung Sph = -7.0 dpt. Als Randbedingung werden vorzugsweise die Koeffizienten der zu optimierenden Fläche des linken und rechten Brillenglases gleichgesetzt, wie oben beschrieben.

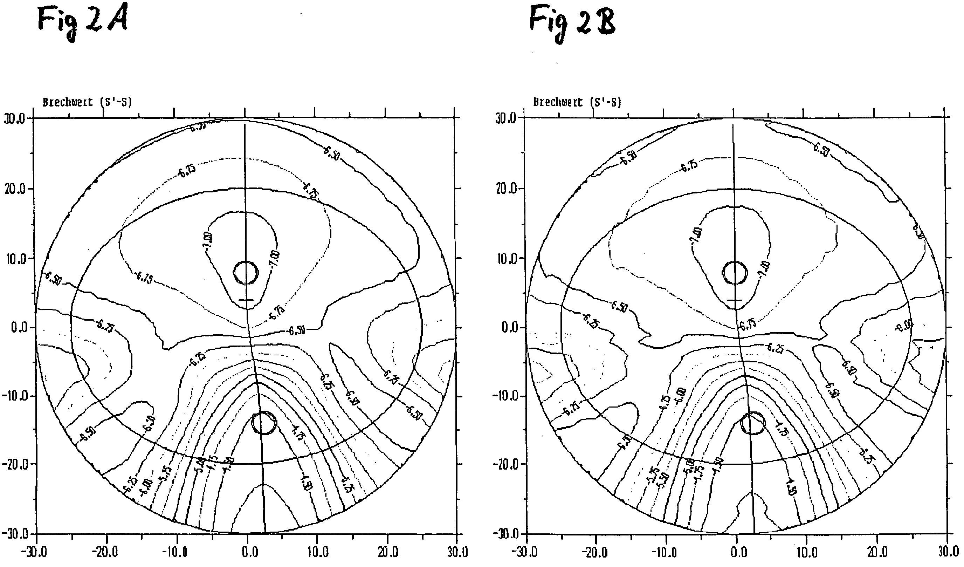

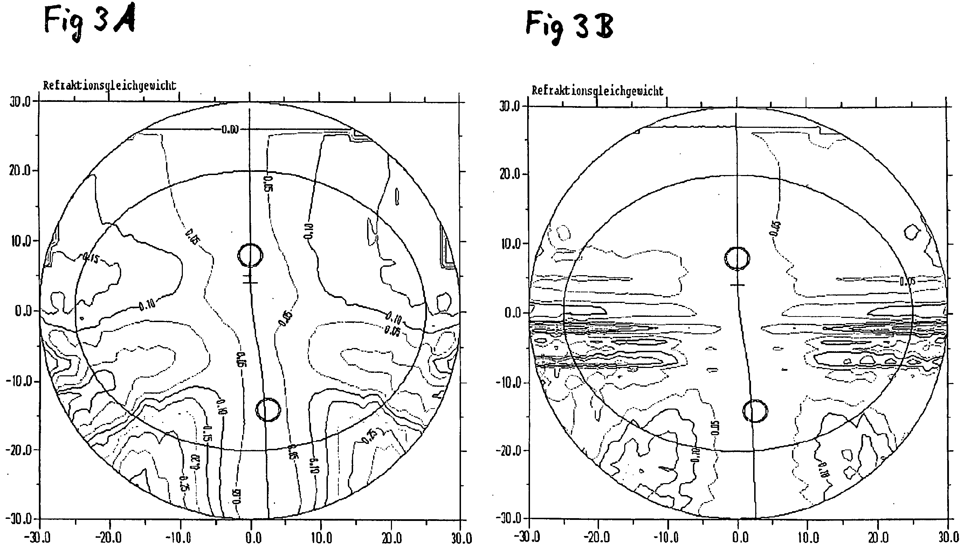

Zunächst wird eine monokulare Optimierung unter Minimierung der in Gl. (1) dargestellten Zielfunktion durchgeführt. Das sich daraus ergebenen monokular optimierte Brillenglas ist Ausgangspunkt für eine binokulare Optimierung, wobei in der binokularen Funktion gemäß Gl. (9) das Refraktionsungleichgewicht als binokulare optische Eigenschaft $Bin^{(1)} = S_{\Delta,\mathrm{tr}} = S_{\Delta,1} - S_{\Delta,\mathrm{r}}$ gemäß Tab. 2 berücksichtigt wird. Die monokularen optischen Eigenschaften Brechwert und Astigmatismus für die Kombination aus dem Brillenglas und dem Auge in der bestimmten Gebrauchsituation sind in den Fig. 1 (Astigmatismus) und Fig. 2 (Brechwert) für das lediglich monokular optimierte Brillenglas (Fig. 1A bzw. 2A) und das erfindungsgemäß optimierte Brillenglas (Fig. 1B bzw. 2B) dargestellt. In Fig. 3 ist außerdem die binokulare optische Eigenschaft $Bin^{(1)} = S_{\Delta,lr} = S_{\Delta,1} - S_{\Delta,\mathrm{r}}$ für das herkömmliche (Fig. 3A) und das erfindungsgemäß optimierte Brillenglas (Fig. 3B) gezeigt. Während im herkömmlichen Brillenglas (Fig. 3A) im Fernteil Werte für das Refraktionsungleichgewicht von $S_{\Delta,\mathrm{tr}} > 0.15 dpt$ und im Nahteil sogar Bereiche mit $S\Delta,lr > 0.3 dpt$ auftreten, werden durch die erfindungsgemäße Optimierung die maximal auftretenden Werte des Refraktionsungleichgewichts auf $S_{\Delta,lr} \leq 0.08 dpt$ im Fernteil und $S_{\Delta,\mathrm{tr}} \leq 0.15 dpt$ im Nahteil reduziert, wodurch die Abbildungseigenschaften und die Verträglichkeit des Brillenglases zur Verwendung in der Brille deutlich verbessert werden.

Vorzugsweise werden die den *i*-ten Bewertungsstellen korrespondierenden Durchblickpunkte des zweiten Brillenglases mittels Ray-Tracing unter Annahme der Orthotropie in Gebrauchsstellung des ersten Brillenglases und des zweiten Brillenglases vor den Augen des Brillenträgers berechnet. Insbesondere werden dabei der Verlauf eines ersten Hauptstrahls und die zugehörige Wellenfront berechnet. Der erste Hauptstrahl wird vorzugsweise als derjenige Strahl definiert, welcher vom Augendrehpunkt des ersten (beispielsweise rechten) Auges durch einen Durchstoßpunkt auf der Vorder- oder Rückfläche des zu optimierenden (beispielsweise rechten) Brillenglases zu einem vorgegebenen Objektpunkt verläuft. Der Durchstoßpunkt des ersten Hauptstrahls mit der Vorder- oder Rückfläche des zu optimierenden Brillenglases stellt die *i*-te Bewertungsstelle dar. Die Berechnung der Wellenfront erfolgt vorzugsweise mittels Wavefront-Tracing.

Anschließend wird der Verlauf eines zweiten Hauptstrahls unter Annahme schneidender Fixierlinien (Orthotropie) iteriert und anschließend die dem zweiten Hauptstrahl zugehörige Wellenfront berechnet. Der zweite Hauptstrahl ist vorzugsweise als derjenige Strahl definiert, welcher durch den vorgegebenen Objektpunkt, das zweite (beispielsweise linke) Brillenglas und den Augendrehpunkt des zweiten (beispielsweise linken) Auges verläuft.

Der Durchstoßpunkt des zweiten Hauptstrahls mit der Vorder- oder Rückfläche des zweiten Brillenglases stellt den der *i*-te Bewertungsstelle korrespondierenden Durchblickpunkt des zweiten Brillenglases dar.

Aus den Daten der Wellenfront können jeweils die monokularen optischen Eigenschaften, wie z.B. astigmatische Abweichung und der Refraktionsfehler der Wellenfront an der *i*-ten Bewertungsstelle des ersten bzw. zweiten Brillenglases in der bestimmten Gebrauchssituation ermittelt werden. Die astigmatische Abweichung stellt die Differenz des tatsächlichen Astigmatismus des Brillenglases und des geforderten (Soll-) Astigmatismus dar. Ebenfalls stellt der Refraktionsfehler die Differenz des tatsächlichen Brechwerts des Brillenglases und des geforderten (Soll-) Brechwerts dar. Vorzugsweise stellt die astigmatische Differenz die Differenz (nach der Methode der schief gekreuzten Zylinder bzw. Kreuzzylindermethode wie z.B. in US 2003/0117578 beschrieben) der so berechneten astigmatischen Abweichungen des ersten bzw. zweiten Brillenglases dar. Nach der Kreuzzylindermethode wird der Unterschied in dem Zylinder bzw. Astigmatismus des linken und rechten Brillenglases vorzugsweise folgendermaßen berechnet:

$$zyl_x = zyl_R \cdot \cos(2 \cdot A_R) - zyl_L \cdot \cos(2 \cdot A_L)$$

$$zyl_y = zyl_R \cdot \sin(2 \cdot A_R) - zyl_L \cdot \sin(2 \cdot A_L)$$

$$zyl_{Dif} = \sqrt{zyl_x^2 + zyl_y^2}$$

$$A_{Dif} = a \tan(\frac{zyl_y}{zyl_x})$$

wobei:

$zyl_R$ den Betrag des Zylinders des rechten Brillenglases;
$A_R$ die Achslage des Zylinders des rechten Brillenglases;
$zyl_L$ den Betrag des Zylinders des linken Brillenglases;
$A_L$ die Achslage des Zylinders des linken Brillenglases
$zyl_{Dif}$ den Betrag des resultierenden Zylinders; und
$A_{Dif}$ die Achslage des resultierenden Zylinders

darstellt.

Das Refraktionsgleichgewicht stellt den Absolutbetrag der Differenz der mittleren Wirkungen des zu optimierenden Brillenglases und des zweiten Brillenglases dar.

Eine vertikale Prismendifferenz ergibt sich vorzugsweise, indem die augenseitigen Hauptstrahlen in die Zyklopenaugenebene projiziert werden und der Winkel zwischen den Geraden in cm/m ausgedrückt wird. Die Zyklopenaugenebene ist die Ebene, welche durch den Punkt in der Mitte der Gerade, welche die Augendrehpunkten der beiden Augen verbindet, geht und senkrecht zu dieser Gerade steht.

Die beiden Augen können durchschnittliche Modelaugen (z.B. Gullstrandaugen) sein, welche in einer durchschnittlichen Gebrauchsstellung angeordnet sind (z.B. nach DIN 58 208 Teil 2). Alternativ können die beiden Augen Modelaugen sein, welche den individuellen Parametern eines Brillenträgers Rechnung tragen, und in einer vorgegebenen (individuellen) Gebrauchsstellung angeordnet sind. Hinsichtlich der Definition des Zyklopenauges bzw. der Zyklopenaugekoordinaten wird ferner auf das Lehrbuch "Refraktionsbestimmung" von Heinz Diepes, 3. Auflage DOZ Verlag, Heidelberg 2004, Seiten 74 bis 75 sowie auf das Lehrbuch "Binokular Vision and Stereopsis" von Ian P. Howard, Brian J. Rogers, Oxford University Press, 1995, Seiten 38 bis 39, Seite 560 verwiesen.

Dabei ist es möglich, die Rezeptdaten der beiden Brillengläser des Brillenglaspaares und/oder die individuellen Daten des Brillenträges, der Gebrauchsstellung und/oder des Objektmodells vorzugsweise per Datenfernübertragung bzw. "online" an eine erfindungsgemäße Vorrichtung zur Herstellung eines Brillenglases zu übermitteln. Die Optimierung des Brillenglases unter Berücksichtigung der Anisometropie des Brillenträgers erfolgt aufgrund der übermittelten, Rezeptdaten und/oder individuellen Daten.

Die Daten des zweiten Brillenglases (Dicke, Pfeilhöhen der Vorder- und der Rückfläche und/oder lokale Krümmungen), welche bei der Berechnung des Verlaufs des Hauptstrahls und der zugehörigen Wellenfront berücksichtigt werden, können theoretische Daten sein, welche sich auf ein Referenz-Brillenglas mit den für die Korrektur des Refraktionsdefizits erforderlichen Rezeptwerten (d.h. mit den vorgegebenen sphärischen, zylindrischen, progressiven und/oder prismatischen Wirkungen) beziehen.

Es ist jedoch möglich, dass die Daten des Brillenglases durch Vermessung der Pfeilhöhen der Vorder- und oder der Rückfläche beispielsweise mittels Abtastvorrichtungen oder einem Interferometer gewonnen werden. Die Vermessung erfolgt vorzugsweise in Punkten eines Rasters, welche in einem vorgegebenen Abstand liegen. Die vollständige Fläche kann nachfolgend z.B. mittels Spline. Funktionen rekonstruiert werden. Dadurch wird ermöglicht, daß etwaige herstellungsbedingte Abweichungen der Pfeilhöhen ebenfalls bei der Berechnung bzw. Optimierung des Brillenglases berücksichtigt werden können. Die Meßdaten des zweiten Brillenglases können ebenfalls per Datenfernübertragung ("online") an eine erfindungsgemäße Vorrichtung zur Herstellung eines Brillenglases übermittelt werden.

Vorzugsweise ist eine der beiden Flächen des ersten Brillenglases, welche vorzugsweise die objektseitige Vorderfläche ist, eine einfache rotationssymmetrische Fläche. Die Optimierung des Brillenglases umfasst dann vorzugsweise eine Flächenoptimierung der gegenüberliegenden Fläche, welche vorzugsweise die augenseitige Rückfläche ist, so dass die obengenante Zielfunktion minimiert wird. Die so optimierte Fläche ist in der Regel eine nicht rotationssymmetrische Fläche, z.B. eine asphärische, eine atorische oder eine progressive Fläche.

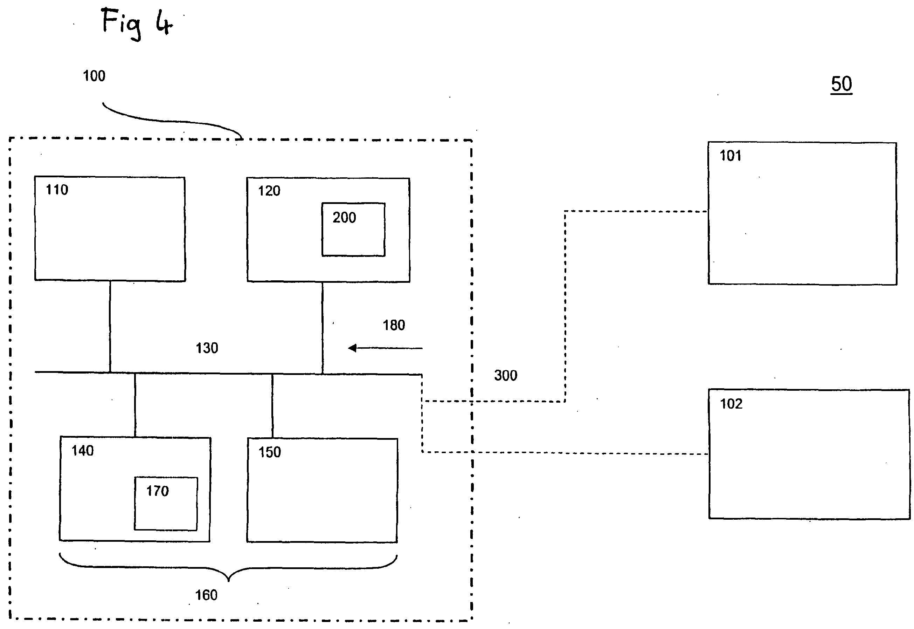

Wie schematisch in Fig. 4 dargestellt ist, wird ferner ein Computerprogrammerzeugnis (d.h. ein in der Patentanspruchskategorie einer Vorrichtung beanspruchtes Computerprogramm) 200 bereitgestellt, welches derart ausgelegt ist, dass es - wenn geladen und ausgeführt auf einem geeigneten Computer 100 bzw. Netzwerk - ein Verfahren zur Optimierung bzw. Herstellung zumindest eines ersten Brillenglases für ein Paar von Brillengläsern zur Benutzung zusammen mit einem zweiten Brillenglas des Paares von Brillengläsern in einer Brille für eine bestimmte Gebrauchssituation durchführen kann. Das Computerprogrammerzeugnis 200 kann auf einem körperlichen Speichermedium bzw. Programmträger 120 gespeichert werden bzw. sein. Das Computerprogrammerzeugnis kann ferner als Programmsignal vorliegen.

Unter Bezugnahme auf Figur 4 wird nachfolgend eine mögliche Computer- bzw. Netzwerkarchitektur beschrieben. Der Prozessor 110 des Computers 100 ist beispielsweise ein Zentralprozessor (CPU), ein Mikrocontroller (MCU), oder ein digitaler Signalprozessor (DSP). Der Speicher 120 symbolisiert Elemente, die Daten und Befehle entweder zeitlich begrenzt oder dauerhaft speichern. Obwohl zum besseren Verständnis der Speicher 120 als Teil des Computers 100 gezeigt ist, kann die Speicherfunktion an anderen Stellen, z.B im Prozessor selbst (z.B. Cache, Register) und/oder auch im Netzwerk 300, beispielsweise in den Computern 101/102 implementiert werden. Der Speicher 120 kann ein Read-Only-Memory (ROM), ein Random-Access-Memory (RAM), ein programmierbares oder nichtprogrammierbares PROM oder ein Speicher mit anderen Zugriffsoptionen sein. Der Speicher 120 kann physisch auf einem computerlesbaren Programmträger, zum Beispiel auf:

(a) einem magnetischen Träger (Festplatte, Diskette, Magnetband);
(b) einem optischen Träger (CD-ROM, DVD);
(c) einem Halbleiterträger (DRAM, SRAM, EPROM, EEPROM);

implementiert bzw. gespeichert werden.

Wahlweise ist der Speicher 120 über verschiedene Medien verteilt. Teile des Speichers 120 können fest oder austauschbar angebracht sein. Zum Lesen und Schreiben benutzt der Computer 100 bekannte Mittel wie z.B. Diskettenlaufwerke, etc.

Der Speicher 120 speichert Unterstützungskomponenten wie zum Beispiel ein Bios (Basic Input Output System), ein Betriebssystem (OS), eine Programmbibliothek, einen Compiler, einen Interpreter und/oder ein Tabellen- bzw. Textverarbeitungsprogramm. Diese Komponenten sind zum besseren Verständnis nicht dargestellt. Unterstützungskomponenten sind kommerziell verfügbar und können auf dem Computer 100 von Fachleuten installiert bzw. in diesem implementiert werden.

Der Prozessor 110, der Speicher 120, die Eingabe- und die Ausgabevorrichtung sind über zumindest einen Bus 130 verbunden und/oder wahlweise über das (mono-, bi- bzw. multidirektionale) Netzwerk 300 (z.B. das Internet) angeschlossen bzw. stehen miteinander in Verbindung. Der Bus 130 sowie das Netzwerk 300 stellen logische und/oder physische Verbindungen dar, die sowohl Befehle als auch Datensignale übertragen. Die Signale innerhalb des Computers 100 sind überwiegend elektrische Signale, wohingegen die Signale im Netzwerk elektrische, magnetische und/oder optische Signale oder auch drahtlose Funksignale sein können.

Netzwerkumgebungen (wie das Netzwerk 300) sind in Büros, unternehmensweiten Computernetzwerken, Intranets und im Internet (d.h. World Wide Web) üblich. Die physische Entfernung zwischen den Computern im Netzwerk ist ohne Bedeutung. Das Netzwerk 300 kann ein drahtloses oder ein verdrahtetes Netzwerk sein. Als mögliche Beispiele für Implementierungen des Netzwerks 300 seien hier angeführt: ein lokales Netzwerk (LAN), ein kabelloses lokales Netzwerk (WLAN), ein Wide Area Network (WAN), ein ISDN-Netz, eine Infrarotverbindung (IR), eine Funkverbindung wie beispielsweise das Universal Mobile Telecommunication System (UMTS) oder eine Satellitenverbindung. Übertragungsprotokolle und Datenformate sind bekannt. Beispiele dafür sind: TCP/IP (Transmission Control Protocol/Internet Protocol), HTTP (Hypertext Transfer Protocol), URL (Unique Resource Locator), HTML (Hypertext Markup Language), XML (Extensible Markup Language), WML (Wireless Application Markup Language), Wireless Application Protocol (WAP) usw.

Die Eingabe- und Ausgabevorrichtungen können Teil einer Benutzerschnittstelle 160 sein. Die Eingabevorrichtung 140 steht für eine Vorrichtung, die Daten und Anweisungen zur Verarbeitung durch den Computer 100 bereitstellt. Beispielsweise ist die Eingabevorrichtung 140 eine Tastatur, eine Zeigevorrichtung (Maus, Trackball, Cursorpfeile), Mikrofon, Joystick, Scanner. Obwohl es sich bei den Beispielen allesamt um Vorrichtungen mit menschlicher Interaktion, vorzugsweise durch eine graphische Benutzerschnittstelle, handelt, kann die Vorrichtung 140 auch ohne menschliche Interaktion auskommen, wie zum Beispiel ein drahtloser Empfänger (z.B. mittels Satelliten- oder terrestrischer Antenne), ein Sensor (z.B. ein Thermometer), ein Zähler (z.B. ein Stückzahlzähler in einer Fabrik). Die Eingabevorrichtung 140 kann zum Lesen des Speichermediums bzw. Trägers 170 verwendet werden.

Die Ausgabevorrichtung 150 bezeichnet eine Vorrichtung, die Anweisungen und Daten anzeigt, die bereits verarbeitet wurden. Beispiele dafür sind ein Monitor oder eine anderer Anzeige (Kathodenstrahlröhre, Flachbildschirm, Flüssigkristallanzeige, Lautsprecher, Drucker, Vibrationsalarm). Ähnlich wie bei der Eingabevorrichtung 140 kommuniziert die Ausgabevorrichtung 150 bevorzugt mit dem Benutzer, vorzugsweise durch eine graphische Benutzerschnittstelle. Die Ausgabevorrichtung kann ebenfalls mit anderen Computern 101, 102, etc. kommunizieren.

Die Eingabevorrichtung 140 und die Ausgabevorrichtung 150 können in einer einzigen Vorrichtung kombiniert werden. Beide Vorrichtungen 140, 150 können wahlweise bereitgestellt werden.

Das Computerprogrammerzeugnis bzw. -produkt 200 umfaßt Programminstruktionen und wahlweise Daten, die den Prozessor 110 unter anderem dazu veranlassen, die Verfahrensschritte des Verfahrens gemäß der Erfindung oder bevorzugte Ausführungsformen hiervon auszuführen. Mit anderen Worten definiert das Computerprogramm 200 die Funktion des Computers 100 und dessen Interaktion mit dem Netzwerksystem 300. Das Computerprogrammerzeugnis 200 kann beispielsweise als Quellcode in einer beliebigen Programmiersprache und/oder als Binärcode in kompilierter Form (d.h. maschinenlesbarer Form) vorliegen. Ein Fachmann ist in der Lage, das Computerprogrammerzeugnis 200 in Verbindung mit jeder der zuvor erläuterten Unterstützungskomponente (z.B. Compiler, Interpreter, Betriebssystem) zu benutzen.

Obwohl das Computerprogrammerzeugnis 200 als im Speicher 120 gespeichert dargestellt ist, kann das Computerprogrammerzeugnis 100 aber auch an beliebig anderer Stelle (z.B. auf dem Speichermedium bzw. Programmträger 170) gespeichert sein.

Das Speichermedium 170 ist beispielhaft als außerhalb des Computers 100 angeordnet dargestellt. Um das Computerprogrammerzeugnis 200 auf den Computer 100 zu übertragen, kann das Speichermedium 170 in das Eingabegerät 140 eingeführt werden. Das Speichermedium 170 kann als ein beliebiger, computerlesbarer Träger implementiert werden, wie zum Beispiel als eines der zuvor erläuterten Medien (vgl. Speicher 120). Das Programmsignal 180, welches vorzugsweise über das Netzwerk 300 zum Computer 100 übertragen wird, kann ebenfalls das Computerprogrammerzeugnis 200 beinhalten bzw. ein Teil hiervon sein.

Schnittstellen zum Koppeln der einzelnen Komponenten des Computersystems 50 sind ebenfalls bekannt. Zur Vereinfachung sind die Schnittstellen nicht dargestellt. Eine Schnittstelle kann beispielsweise eine serielle Schnittstelle, eine parallele Schnittstelle, ein Gameport, ein universeller serieller Bus (USB), ein internes oder externes Modem, ein Grafikadapter und/oder eine Soundkarte aufweisen.

Es ist insbesondere möglich, Rezeptdaten der Brillengläser vorzugsweise zusammen mit individuellen Daten des Brillenträgers (einschließlich der Daten der individuellen Gebrauchssituation) und/oder Daten des Brillenglases (Brechungsindex, Pfeilhöhen der Vorder- und Rückfläche) vorzugsweise per Datenfernübertragung an eine erfindungsgemäße Vorrichtung zur Herstellung eines Brillenglases zu übermitteln. Die Optimierung des Brillenglases erfolgt dann vorzugsweise aufgrund der übermittelten Rezeptdaten und individuellen Daten.

### Bezugszeichenliste

| | |
|---|---|
| 50 | Computersystem |
| 100, 101, 102 | Computer |
| 110 | Prozessor |
| 120 | Speicher |
| 130 | Bus |
| 140 | Eingabevorrichtung |
| 150 | Ausgabevorrichtung |
| 160 | Benutzerschnittstelle |
| 170 | Speichermedium |
| 180 | Programmsignal |
| 200 | Computerprogrammerzeugnis |
| 300 | Netzwerk |

### Patentansprüche

**1.** Verfahren zur Optimierung und Herstellung zumindest eines ersten Brillenglases für ein Paar von Brillengläsern zur Benutzung zusammen mit einem zweiten Brillenglas des Paares von Brillengläsern in einer Brille für eine bestimmte Gebrauchssituation, umfassend einen binokularen Berechnungs- bzw. Optimierungsschritt zumindest einer Fläche des ersten Brillenglases derart, dass eine Zielfunktion

$$F = g^{(1)} F_{\mathrm{mono}}^{(1)} + g^{\mathrm{bino}} F_{\mathrm{bino}}^{'} + \tilde{F}$$

minimiert wird, welche als Summe aus zumindest einer ersten monokularen Funktion $F_{mono}^{(1)}$ und einer binokularen Funktion $F_{\mathrm{bino}}$ mit jeweiligen Gewichtungsfaktoren $g^{(1)}$ bzw. $g^{bino}$ mit einem Restterm $\tilde{F}$ definiert ist, wobei die erste monokulare Funktion $F_{mono}^{(1)}$ von den Werten zumindest einer ersten monokularen optischen Eigenschaft $Mon^{(m1)}$ an einer Vielzahl von Bewertungsstellen $i_1$ des ersten Brillenglases abhängt, wobei die binokulare Funktion $F_{\mathrm{bino}}$

für eine Vielzahl von Paaren $\left(i_1^b, i_2^b\right)$ aus jeweils einer binokularen Bewertungsstelle $i_1^b$ des ersten Brillenglases und einer in der bestimmten Gebrauchssituation dazu korrespondierenden binokularen Bewertungsstelle $i_2^b$ des zweiten Brillenglases von den Werten einer zweiten monokularen optischen Eigenschaft $Mon^{(b)}$ sowohl an der binokularen Bewertungsstelle $i_1^b$ des ersten Brillenglases als auch an der binokularen Bewertungsstelle $i_2^b$ des zweiten Brillenglases abhängt, wobei die zweite monokulare optische Eigenschaft $Mon^{(b)}$ eine nicht-prismatische optische Eigenschaft umfasst, und wobei der Restterm F nicht von den Werten der ersten monokularen optischen Eigenschaft an den Bewertüngsstellen des ersten Brillenglases abhängt,
wobei der binokulare Berechnungs- bzw. Optimierungsschritt derart erfolgt, dass in der Zielfunktion gemäß

$$F = g^{(1)}F_{\text{mono}}^{(1)} + g^{(2)}F_{\text{mono}}^{(2)} + g^{\text{bino}}F_{\text{bino}}$$

als weiterer Summand eine zweite monokulare Funktion $F_{mono}^{(2)}$ mit einem Gewichtungsfaktor $g^{(2)}$ berücksichtigt wird, welche von den Werten zumindest einer dritten monokularen optischen Eigenschaft $Mon^{(m2)}$ an einer Vielzahl von Bewertungsstellen $i_2$ des zweiten Brillenglases abhängt.

2. Verfahren nach Anspruch, wobei der binokulare Berechnungs- bzw. Optimierungsschritt derart erfolgt, dass die zumindest eine in der ersten und/oder zweiten monokularen Funktion berücksichtigte monokulare optische Eigenschaft das sphärische Äquivalent $Mon^{(1)}=S_\Delta$ und/oder den Betrag des Zylinders $Mon^{(2)}=Z_\Delta$ des Refraktionsdefizits des ersten bzw. zweiten Brillenglases umfasst.

3. Verfahren nach einem der vorangegangenen Ansprüche, wobei der binokulare Berechnungs- bzw. Optimierungsschritt derart erfolgt, dass die binokulare Funktion $F_{\text{bino}}$ für jedes Paar $\left(i_1^b, i_2^b\right)$ binokularer Bewertungsstellen von der Differenz

$$Mon^{(b)}\left(i_1^b\right) - Mon^{(b)}\left(i_2^b\right)$$

zwischen dem Wert der zweiten monokularen optischen Eigenschaft $Mon^{(b)}$ an der binokularen Bewertungsstelle $i_1^b$ des ersten Brillenglases und dem Wert der zweiten monokularen optischen Eigenschaft $Mon^{(b)}$ an der korrespondierenden binokularen Bewertungsstelle $i_2^b$ des zweiten Brillenglases abhängt.

4. Verfahren nach einem der vorangegangenen Ansprüche, wobei der binokulare Berechnungs- bzw. Optimierungsschritt derart erfolgt, dass in der ersten und/oder zweiten monokularen Funktion gemäß

$$F_{mono}^{(s)} = \sum_m \sum_{i_s} g_s^{(m)}(i_s)\left(Mon^{(m)}(i_s) - Mon_{Soll}^{(m)}(i_s)\right)^2$$

Abweichungen der Werte zumindest einer monokularen optischen Eigenschaft $Mon^{(m)}$ von zugehörigen Sollwerten $Mon_{s,Soll}^{(m)}$ an den Bewertungsstellen $i_s$ des ersten ($s=1$) bzw. zweiten ($s=2$) Brillenglases mit jeweiligen Gewichtungsfaktoren $g_s^{(m)}(i_s)$ berücksichtigt werden, und dass in der binokularen Funktion gemäß

$$F_{bino} = \sum_k \sum_i g_{bin}^{(k)}(i)\left(Bin^{(k)}(i) - Bin_{Soll}^{(k)}(i)\right)^2$$

Abweichungen der Werte zumindest einer binokularen optischen Eigenschaft $Bin^{(k)}$ von zugehörigen Sollwerten

$Bin^{(k)}_{Soll}$ an Bewertungsstellen $i$ des ersten Brillenglases mit jeweiligen Gewichtungsfaktoren $g^{(k)}_{bin}(i)$ berücksichtigt werden, wobei die Summation über die Bewertungsstellen $i$ zumindest über die binokularen Bewertungsstellen $i^b_1$ des ersten Brillenglases erfolgt und die zumindest eine binokulare optische Eigenschaft $Bin^{(k)}$ für jede binokulare Bewertungsstelle $i^b_1$ des ersten Brillenglases sowohl vom Wert der zumindest einen zweien monokularen optischen Eigenschaft $Mon^{(b)}$ an der binokularen Bewertungsstelle $i^b_1$ des ersten Brillenglases als auch vom Wert der zumindest einen zweiten monokularen optischen Eigenschaft $Mon^{(b)}$ an der dazu korrespondierenden binokularen Bewertungsstelle $i^b_2$ des zweiten Brillenglases abhängt.

5. Verfahren nach Anspruch 4, außerdem umfassend:
- Bestimmen einer Vielzahl von ersten monokularen Bewertungsstellen $i^m_1$ als diejenigen Bewertungsstellen $i_1$ des ersten Brillenglases, zu denen in der bestimmten Gebrauchssituation keine korrespondierende Bewertungsstelle des zweiten Brillenglases existiert, und
- Zuordnen jeweils einer Bewertungsstelle $i_2$ des zweiten Brillenglases als zweite monokulare Referenzstelle $i^r_2$ zu jeder ersten monokularen Bewertungsstelle $i^r_1$ ,

wobei der binokulare Berechnungs- bzw. Optimierungsschritt derart erfolgt, dass die Summation über die Bewertungsstellen $i$ in der binokularen Funktion $F_{bino}$ über alle Bewertungsstellen $i_1$ des ersten Brillenglases erfolgt, und wobei die zumindest eine binokulare optische Eigenschaft $Bin^{(k)}$ für jede erste monokulare Bewertungsstelle $i^m_1$ des ersten Brillenglases sowohl vom Wert der zumindest einen zweiten monokularen optischen Eigenschaft $Mon^{(b)}$ an der ersten monokularen Bewertungsstelle $i^m_1$ des ersten Brillenglases als auch vom Wert der zumindest einen zweiten monokularen optischen Eigenschaft $Mon^{(b)}$ an der dieser ersten monokularen Bewertungsstelle $i^m_1$ zugeordneten zweiten monokularen Referenzstelle $i^r_2$ des zweiten Brillenglases abhängt, wobei das Verfahren außerdem umfasst:
- Bestimmen einer Vielzahl von zweiten monokularen Bewertungsstellen $i^m_2$ als diejenigen Bewertungsstellen $i_2$ des zweiten Brillenglases, zu denen in der bestimmten Gebrauchssituation keine korrespondierende Bewertungsstelle des ersten Brillenglases existiert, und
- Zuordnen jeweils einer Bewertungsstelle $i_1$ des ersten Brillenglases als erste monokulare Referenzstelle $i^r_1$ zu jeder zweiten monokularen Bewertungsstelle $i^m_2$ ,

wobei der binokulare Berechnungs- bzw. Optimierungsschritt derart erfolgt, dass die Summation über die Bewertungsstellen $i$ in der binokularen Funktion $F_{bino}$ außerdem über die zweiten monokularen Bewertungsstellen erfolgt, und wobei die zumindest eine binokulare optische Eigenschaft $Bin^{(k)}$ für jede zweite monokulare Bewertungsstelle $i^m_2$ des zweiten Brillenglases sowohl vom Wert der zumindest einen zweiten monokularen optischen Eigenschaft $Mon^{(b)}$ an der zweiten monokularen Bewertungsstelle $i^m_2$ des zweiten Brillenglases als auch vom Wert der zumindest einen zweiten monokularen optischen Eigenschaft $Mon^{(b)}$ an der dieser zweiten monokularen Bewertungsstelle $i^m_2$ zugeordneten ersten monokularen Referenzstelle $i^r_1$ des ersten Brillenglases abhängt.

6. Verfahren nach Anspruch 5, wobei jeder monokularen Bewertungsstelle $i^m$ des einen Brillenglases die in der bestimmten Gebrauchssituation dazu horizontalsymmetrische Bewertungsstelle des anderen Brillenglases als entsprechende monokulare *Referenzstelle* $i^r$ zugeordnet wird.

7. Verfahren nach einem der vorangegangen Ansprüche, welches vor dem binokularen Berechnungs- bzw. Optimierungsschritt einen ersten und/oder zweiten monokularen Berechnungs- bzw. Optimierungsschritt derart umfasst, dass die erste monokulare Funktion $F_{mono}^{(1)}$ bzw. die zweite monokulare Funktion $F_{mono}^{(2)}$ minimiert wird.

8. Verfahren nach einem der vorangegangnen Ansprüche, welches außerdem einen Schritt des Bestimmens eines Führungsauges umfasst, wobei das dem Führungsauge entsprechende Brillenglas des Paares von Brillengläsern als zweites Brillenglas festgelegt wird.

9. Verfahren nach einem der vorangegangen Ansprüche, wobei der binokulare Berechnungs- bzw. Optimierungsschritt einen ersten einseitigen Variationsschritt derart umfasst, dass die Zielfunktion $F$ durch Variation der zumindest einen Fläche des ersten Brillenglases minimiert wird, während das zweite Brillenglas unverändert bleibt.

10. Verfahren nach Anspruch 9, wobei der binokulare Berechnungs- bzw. Optimierungsschritt außerdem einen zweiten einseitigen Variationsschritt derart umfasst, dass die Zielfunktion $F$ durch Variation zumindest einer Fläche des zweiten Brillenglases minimiert wird, während das erste Brillenglas unverändert bleibt.

11. Verfahren nach Anspruch 10, wobei der binokulare Berechnungs- bzw. Optimierungsschritt derart erfolgt, dass der erste und zweite einseitige Variationsschritt jeweils nacheinander mehrmals abwechselnd ausgeführt werden.

12. Computerprogrammerzeugnis, welches Programmteile enthält, welche ausgelegt sind, wenn geladen und ausgeführt auf einem Computer, ein Verfahren zur Optimierung zumindest eines ersten Brillenglases für ein Paar von Brillengläsern zur Benutzung zusammen mit einem zweiten Brillenglas des Paares von Brillengläsern in einer Brille für eine bestimmte Gebrauchssituation durchzuführen, wobei das Verfahren zur Optimierung der zumindest einen Fläche des ersten Brillenglases einen binokularen Berechnungs- bzw. Optimierungsschritt umfasst, welcher derart erfolgt, dass eine Zielfunktion

$$F = g^{(1)}\dot{F}_{\text{mono}}^{(1)} + g^{\text{bino}}F_{\text{bino}} + \tilde{F}$$

minimiert wird, welche als Summe aus zumindest einer ersten monokularen Funktion $F_{mono}^{(1)}$ und einer binokularen Funktion $F_{\text{bino}}$ mit jeweiligen Gewichtungsfaktoren $g^{(1)}$ bzw. $g^{bino}$ definiert ist, wobei die erste monokulare Funktion $F_{mono}^{1}$ von den Werten zumindest einer ersten monokularen optischen Eigenschaft $Mon^{(m1)}$ an einer Vielzahl von Bewertungsstellen $i_1$ des ersten Brillenglases abhängt, wobei die binokulare Funktion $F_{\text{bino}}$ für eine Vielzahl von Paaren $\left(i_1^b, i_2^b\right)$ aus jeweils einer binokularen Bewertungsstelle $i_1^b$ des ersten Brillenglases und einer in der bestimmten Gebrauchssituation dazu korrespondierenden binokularen Bewertungsstelle $i_2^b$ des zweiten Brillenglases von den Werten einer zweiten monokularen optischen Eigenschaft $Mon^{(b)}$ sowohl an der binokularen Bewertungsstelle $i_1^b$ des ersten Brillenglases als auch an der binokularen Bewertungsstelle $i_2^b$ des zweiten Brillenglases abhängt, wobei die zweite monokulare optische Eigenschaft $Mon^{(b)}$ eine nicht-prismatische optische Eigenschaft umfasst, und wobei der Restterm $\tilde{F}$ nicht von den Werten der ersten monokularen optischen Eigenschaft an den Bewertungsstellen des ersten Brillenglases abhängt, wobei der binokulare Berechnungs- bzw. Optimierungsschritt derart erfolgt, dass in der Zielfunktion gemäß

$$F = g^{(1)}F_{\text{mono}}^{(1)} + g^{(2)}F_{\text{mono}}^{(2)} + g^{\text{bino}}F_{\text{bino}}$$

als weiterer Summand eine zweite monokulare Funktion $F_{mono}^{(2)}$ mit einem Gewichtungsfaktor $g^{(2)}$ berücksichtigt wird, welche von den Werten zumindest einer dritten monokularen optischen Eigenschaft $Mon^{(m2)}$ an einer Vielzahl von Bewertungsstellen $i_2$ des zweiten Brillenglases abhängt.

13. Speichermedium mit einem darauf gespeicherten Computerprogramm, wobei das Computerprogramm ausgelegt ist, wenn geladen und ausgeführt auf einem Computer, ein Verfahren zur Optimierung zumindest eines ersten Brillenglases für ein Paar von Brillengläsern zur Benutzung zusammen mit einem zweiten Brillenglas des Paares von Brillengläsern in einer Brille für eine bestimmte Gebrauchssituation durchzuführen, wobei das Verfahren zur Optimierung der zumindest einen Fläche des ersten Brillenglases einen binokularen Berechnungs- bzw. Optimierungsschritt umfasst, welcher derart erfolgt, dass eine Zielfunktion

$$F = g^{(1)}F_{\mathrm{mono}}^{(1)} + g^{\mathrm{bino}}F_{\mathrm{bino}} + \tilde{F}$$

minimiert wird, welche als Summe aus zumindest einer ersten monokularen Funktion $F_{mono}^{(1)}$ und einer binokularen Funktion $F_{\mathrm{bino}}$ mit jeweiligen Gewichtungsfaktoren $g^{(1)}$ bzw. $g^{bino}$ definiert ist, wobei die erste monokulare Funktion $F_{mono}^{1}$ von den Werten zumindest einer ersten monokularen optischen Eigenschaft $Mon^{(m1)}$ an einer Vielzahl von Bewertungsstellen $i_1$ des ersten Brillenglases abhängt, wobei die binokulare Funktion $F_{\mathrm{bino}}$ für eine Vielzahl von Paaren $\left(i_1^b, i_2^b\right)$ aus jeweils einer binokularen Bewertungsstelle $i_1^b$ des ersten Brillenglases und einer in der bestimmten Gebrauchssituation dazu korrespondierenden binokularen Bewertungsstelle $i_2^b$ des zweiten Brillenglases von den Werten einer zweiten monokularen optischen Eigenschaft $Mon^{(b)}$ sowohl an der binokularen Bewertungsstelle $i_1^b$ des ersten Brillenglases als auch an der binokularen Bewertungsstelle $i_2^b$ des zweiten Brillenglases abhängt, wobei die zweite monokulare optische Eigenschaft $Mon^{(b)}$ eine nicht-prismatische optische Eigenschaft umfasst, und wobei der Restterm $\tilde{F}$ nicht von den Werten der ersten monokularen optischen Eigenschaft an den Bewertungsstellen des ersten Brillenglases abhängt,
wobei der binokulare Berechnungs- bzw. Optimierungsschritt derart erfolgt, dass in der Zielfunktion gemäß

$$F = g^{(1)}F_{\mathrm{mono}}^{(1)} + g^{(2)}F_{\mathrm{mono}}^{(2)} + g^{\mathrm{bino}}F_{\mathrm{bino}}$$

als weiterer Summand eine zweite monokulare Funktion $F_{mono}^{(2)}$ mit einem Gewichtungsfaktor $g^{(2)}$ berücksichtigt wird, welche von den Werten zumindest einer dritten monokularen optischen Eigenschaft $Mon^{(m2)}$ an einer Vielzahl von Bewertungsstellen $i_2$ des zweiten Brillenglases abhängt.

14. Vorrichtung zur Herstellung eines Brillenglases, wobei die Vorrichtung umfasst:

    - Erfassungsmittel zum Erfassen von Zieldaten eines Brillenglases;
    - Berechnungs- und Optimierungsmittel zum Berechnen und Optimieren zumindest eines ersten Brillenglases für ein Paar von Brillengläsern zur Benutzung zusammen mit einem zweiten Brillenglas des Paares von Brillengläsern in einer Brille für eine bestimmte Gebrauchssituation, wobei das Berechnen und Optimieren der zumindest einen Fläche des ersten Brillenglases einen binokularen Berechnungs- bzw. Optimierungsschritt umfasst, welcher derart erfolgt, dass eine Zielfunktion

$$F = g^{(1)}F_{\mathrm{mono}}^{(1)} + g^{\mathrm{bino}}F_{\mathrm{bino}} + \tilde{F}$$

minimiert wird, welche als Summe aus zumindest einer ersten monokularen Funktion $F_{mono}^{(i)}$ und einer binokularen Funktion $F_{\mathrm{bino}}$ mit jeweiligen Gewichtungsfaktoren $g^{(l)}$ bzw. $g^{bino}$ definiert ist, wobei die erste monokulare Funktion $F_{mono}^{1}$ von den Werten zumindest einer ersten monokularen optischen Eigenschaft $Mon^{(ml)}$ an einer Vielzahl von Bewertungsstellen $i_1$ des ersten Brillenglases abhängt, wobei die binokulare Funktion $F_{\mathrm{bino}}$ für eine Vielzahl von Paaren $\left(i_1^b, i_2^b\right)$ aus jeweils einer binokularen Bewertungsstelle $i_1^b$ des ersten Brillenglases und einer in der bestimmten Gebrauchssituation dazu korrespondierenden binokularen Bewertungsstelle $i_2^b$ des zweiten Brillenglases von den Werten einer zweiten monokularen optischen Eigenschaft $Mon^{(b)}$ sowohl an der binokularen Bewertungsstelle $i_1^b$ des ersten Brillenglases als auch an der binokularen Bewertungsstelle $i_2^b$ des zweiten Brillenglases abhängt, wobei die zweite monokulare optische Eigenschaft $Mon^{(b)}$ eine nicht-prismatische optische Eigenschaft umfasst, und wobei der Restterm $\tilde{F}$ nicht von den Werten der ersten monokularen optischen Eigenschaft an den Bewertungsstellen des ersten Brillenglases abhängt,

wobei der binokulare Berechnungs- bzw. Optimierungsschritt derart erfolgt, dass in der Zielfunktion gemäß

$$F = g^{(1)}F^{(1)}_{\text{mono}} + g^{(2)}F^{(2)}_{\text{mono}} + g^{\text{bino}}F_{\text{bino}}$$

als weiterer Summand eine zweite monokulare Funktion $F^{(2)}_{\text{mono}}$ mit einem Gewichtungsfaktor $g^{(2)}$ berücksichtigt wird, welche von den Werten zumindest einer dritten monokularen optischen Eigenschaft $Mon^{(m2)}$ an einer Vielzahl von Bewertungsstellen $i_2$ des zweiten Brillenglases abhängt.

## Claims

1. Method for optimising and producing at least one first spectacle lens for a pair of spectacle lenses for use together with a second spectacle lens of the pair of spectacle lenses in spectacles for a specific situation of use, comprising a binocular calculating or optimising step of at least one surface of the first spectacle lens such that a target function

$$F = g^{(1)}F^{(1)}_{\text{mono}} + g^{\text{bino}}F_{\text{bino}} + \tilde{F}$$

is minimised, which is defined as the sum of at least one first monocular function $F^{(1)}_{\text{mono}}$ and one binocular function $F_{\text{bino}}$ with respective weighting factors $g^{(1)}$ or $g^{\text{bino}}$ with a residual term $F\sim$, the first monocular function $F^{(1)}_{\text{mono}}$ depending upon the values of at least one first monocular optical property $Mon^{(m1)}$ at a large number of evaluation points $i_1$ of the first spectacle lens, the binocular function $F_{\text{bino}}$ for a large number of pairs $(i^b_1, i^b_2)$ of respectively one binocular evaluation point $i^b_1$ of the first spectacle lens and of one binocular evaluation point $i^b_2$, corresponding thereto in the specific situation of use, of the second spectacle lens depending upon the values of a second monocular optical property $Mon^{(b)}$ both at the binocular evaluation point $i^b_1$ of the first spectacle lens and at the binocular evaluation point $i^b_2$ of the second spectacle lens, the second monocular optical property $Mon^{(b)}$ comprising a non-prismatic optical property, and the residual term $F\sim$ not depending upon the values of the first monocular optical property at the evaluation points of the first spectacle lens,

the binocular calculating or optimising step being effected such that, in the target function according to

$$F = g^{(1)}F^{(1)}_{\text{mono}} + g^{(2)}F^{(2)}_{\text{mono}} + g^{\text{bino}}F_{\text{bino}}$$

as further summand, a second monocular function $F^{(2)}_{\text{mono}}$ with a weighting factor $g^{(2)}$ being taken into account, which depends upon the values of at least one third monocular optical property $Mon^{(m2)}$ at a large number of evaluation points $i_2$ of the second spectacle lens.

2. Method according to claim 1, the binocular calculating or optimising step being effected such that the at least one monocular optical property, taken into account in the first and/or second monocular function, comprises the spherical equivalent $Mon^{(1)} = S_\Delta$ and/or the amount of the cylinder $Mon^{(2)} = Z_\Delta$ of the refraction deficit of the first or second spectacle lens.

3. Method according to one of the preceding claims, the binocular calculating or optimising step being effected such that the binocular function $F_{\text{bino}}$ for each pair $(i^b1, i^b_2)$ of binocular evaluation points depends upon the difference

$$Mon^{(b)}\left(i^b_1\right) - Mon^{(b)}\left(i^b_2\right)$$

between the value of the second monocular optical property $Mon^{(b)}$ at the binocular evaluation point $i^b1$ of the first spectacle lens and the value of the second monocular optical property $Mon^{(b)}$ at the corresponding binocular evaluation point $i^b_2$ of the second spectacle lens.

4. Method according to one of the preceding claims, the binocular calculating or optimising step being effected such that, in the first and/or second monocular function according to

$$F_{mono}^{(s)} = \sum_{m} \sum_{i_s} g_s^{(m)}(i_s)\left(Mon^{(m)}(i_s) - Mon_{ref.}^{(m)}(i_s)\right)^2$$

deviations of the values of at least one monocular optical property $Mon^{(m)}$ of associated reference values $Mon^{(m)}_{s,ref.}$ at the evaluation points $i_s$ of the first (s = 1) or second (s = 2) spectacle lens with respective weighting factors $g_s^{(m)}(i_s)$ are taken into account, and in that, in the binocular function according to

$$F_{bino} = \sum_{k} \sum_{i} g_{bin}^{(k)}(i)\left(Bin^{(k)}(i) - Bin_{ref.}^{(k)}(i)\right)^2$$

deviations of the values of at least one binocular optical property $Bin^{(k)}$ of associated reference values $Bin^{(k)}_{ref.}$ at evaluation points $i$ of the first spectacle lens with respective weighting factors $g^{(k)}_{bin}(i)$ are taken into account, the summation over the evaluation points $i$ being effected at least over the binocular evaluation points $i^b_1$ of the first spectacle lens and the at least one binocular optical property $Bin^{(k)}$ for each binocular evaluation point $i^b_1$ of the first spectacle lens depending both upon the value of the at least one second monocular optical property $Mon^{(b)}$ at the binocular evaluation point $i^b_1$ of the first spectacle lens and upon the value of the at least one second monocular optical property $Mon^{(b)}$ at the binocular evaluation point $i^b_2$, corresponding thereto, of the second spectacle lens.

5. Method according to claim 4, comprising in addition:

   - determining a large number of first monocular evaluation points $i^m_1$ as those evaluation points $i_1$ of the first spectacle lens, for which, in the specific situation of use, no corresponding evaluation point of the second spectacle lens exists, and
   - assigning respectively one evaluation point $i_2$ of the second spectacle lens as second monocular reference point $i^r_2$ to each first monocular evaluation point $i^r1$,

   the binocular calculating or optimising step being effected such that the summation over the evaluation points $i$ in the binocular function $F_{bino}$ being effected over all evaluation points $i_1$ of the first spectacle lens, and the at least one binocular optical property $Bin^{(k)}$ for each first monocular evaluation point $i^m_1$ of the first spectacle lens depending both upon the value of the at least one second monocular optical property $Mon^{(b)}$ at the first monocular evaluation point $i^m_1$ of the first spectacle lens and upon the value of the at least one second monocular optical property $Mon^{(b)}$ at the second monocular reference point $i^r_2$, assigned to this first monocular evaluation point $i^m_1$, of the second spectacle lens,
   the method comprising in addition:

   - determining a large number of second monocular evaluation points $i^m_2$ as those evaluation points $i_2$ of the second spectacle lens for which, in the specific situation of use, no corresponding evaluation point of the first spectacle lens exists, and
   - assigning respectively one evaluation point $i_1$ of the first spectacle lens as first monocular reference point $i^r1$ to each second monocular evaluation point $i^m_2$,

   the binocular calculating or optimising step being effected such that the summation over the evaluation points $i$ in the binocular function $F_{bino}$ is effected in addition over the second monocular evaluation points, and the at least one binocular optical property $Bin^{(k)}$ for each second monocular evaluation point $i^m_2$ of the second spectacle lens depending both upon the value of the at least one second monocular optical property $Mon^{(b)}$ at the second monocular evaluation point $i^m_2$ of the second spectacle lens and upon the value of the at least one second monocular optical property $Mon^{(b)}$ at the first monocular reference point $i^r_1$, assigned to this second monocular evaluation point $i^m_2$, of the first spectacle lens.

6. Method according to claim 5, the evaluation point of the other spectacle lens, horizontally symmetrical thereto in the specific situation of use, being assigned to each monocular evaluation point $i^m$ of the one spectacle lens as corresponding monocular reference point $i^r$.

7. Method according to one of the preceding claims, which, before the binocular calculating or optimising step, comprises a first and/or second monocular calculating or optimising step such that the first monocular function $F^{(1)}_{mono}$ or the second monocular function $F^{(2)}_{mono}$ is minimised.

8. Method according to one of the preceding claims which comprises in addition a step of determining a leading eye, the spectacle lens of the pair of spectacle lenses, corresponding to the leading eye, being established as second spectacle lens.

9. Method according to one of the preceding claims, the binocular calculating or optimising step comprising a first one-side variation step such that the target function $F$ is minimised by varying the at least one surface of the first spectacle lens, whilst the second spectacle lens remains unchanged.

10. Method according to claim 9, the binocular calculating or optimising step comprising in addition a second one-side variation step such that the target function $F$ is minimised by varying at least one surface of the second spectacle lens, whilst the first spectacle lens remains unchanged.

11. Method according to claim 10, the binocular calculating or optimising step being effected such that the first and second one-side variation step are respectively implemented several times alternately in succession.

12. Computer program product which comprises program parts which are designed, when loaded and executed on a computer, to implement a method for optimising at least one first spectacle lens for a pair of spectacle lenses for use together with a second spectacle lens of the pair of spectacle lenses in spectacles for a specific situation of use, the method for optimising the at least one surface of the first spectacle lens comprising a binocular calculating or optimising step which is effected such that a target function

$$F = g^{(1)} \dot{F}^{(1)}_{mono} + g^{bino} F_{bino} + \tilde{F}$$

is minimised, which is defined as the sum of at least one first monocular function $F^{(1)}_{mono}$ and a binocular function $F_{bino}$ with respective weighting factors $g^{(1)}$ or $g^{bino}$, the first monocular function $F^{(1)}_{mono}$ depending upon the values of at least one first monocular optical property $Mon^{(m1)}$ at a large number of evaluation points $i_1$ of the first spectacle lens, the binocular function $F_{bino}$ for a large number of pairs $(i^b_1, i^b_2)$ of respectively one binocular evaluation point $i^b_1$ of the first spectacle lens and of a binocular evaluation point $i^b_2$, corresponding thereto in the specific situation of use, of the second spectacle lens depending upon the values of a second monocular optical property $Mon^{(b)}$ both at the binocular evaluation point $i^b_1$ of the first spectacle lens and at the binocular evaluation point $i^b_2$ of the second spectacle lens, the second monocular optical property $Mon^{(b)}$ comprising a non-prismatic optical property, and the residual term $F\sim$ not depending upon the values of the first monocular optical property at the evaluation points of the first spectacle lens,
the binocular calculating or optimising step being effected such that, in the target function according to

$$F = g^{(1)} F^{(1)}_{mono} + g^{(2)} F^{(2)}_{mono} + g^{bino} F_{bino}$$

as further summand, a second monocular function $F^{(2)}_{mono}$ with a weighting factor $g^{(2)}$ is taken into account which depends upon the values of at least one third monocular optical property $Mon^{(m2)}$ at a large number of evaluation points $i_2$ of the second spectacle lens.

13. Storage medium with a computer program stored thereon, the computer program being designed, when loaded and executed on a computer, to implement a method for optimising at least one first spectacle lens for a pair of spectacle lenses for use together with a second spectacle lens of the pair of spectacle lenses in spectacles for a specific situation of use, the method for optimising the at least one surface of the first spectacle lens comprising a binocular calculating or optimising step which is effected such that a target function is minimised,

$$F = g^{(1)} F^{(1)}_{\mathrm{mono}} + g^{\mathrm{bino}} F_{\mathrm{bino}} + \tilde{F}$$

which is defined as the sum of at least one first monocular function $F^{(1)}_{\mathrm{mono}}$ and a binocular function $F_{\mathrm{bino}}$ with respective weighting factors $g^{(1)}$ or $g^{\mathrm{bino}}$, the first monocular function $F^{(1)}_{\mathrm{mono}}$ depending upon the values of at least one first monocular optical property $Mon^{(m1)}$ at a large number of evaluation points $i_1$ of the first spectacle lens, the binocular function $F_{\mathrm{bino}}$ for a large number of pairs $(i^b_1, i^b_2)$ of respectively one binocular evaluation point $i^b_1$ of the first spectacle lens and of a binocular evaluation point $i^b_2$, corresponding thereto in the specific situation of use, of the second spectacle lens depending upon the values of a second monocular optical property $Mon^{(b)}$ both at the binocular evaluation point $i^b1$ of the first spectacle lens, and at the binocular evaluation point $i^b_2$ of the second spectacle lens, the second monocular optical property $Mon^{(b)}$ comprising a non-prismatic optical property, and the residual term $F\!\sim$ not depending upon the values of the first monocular optical property at the evaluation points of the first spectacle lens,

the binocular calculating or optimising step being effected such that, in the target function according to

$$F = g^{(1)} F^{(1)}_{\mathrm{mono}} + g^{(2)} F^{(2)}_{\mathrm{mono}} + g^{\mathrm{bino}} F_{\mathrm{bino}}$$

as further summand, a second monocular function $F^{(2)}_{\mathrm{mono}}$ with a weighting factor $g^{(2)}$ is taken into account which depends upon the values of at least one third monocular optical property $Mon^{(m2)}$ at a large number of evaluation points $i_2$ of the second spectacle lens.

**14.** Device for producing a spectacle lens, the device comprising:

- determining means for determining target data of a spectacle lens;
- calculating and optimising means for calculating and optimising at least one first spectacle lens for a pair of spectacle lenses for use together with a second spectacle lens of the pair of spectacle lenses in spectacles for a specific situation of use, the calculating and optimising of the at least one surface of the first spectacle lens comprising a binocular calculating or optimising step which is effected such that a target function

$$F = g^{(1)} F^{(1)}_{\mathrm{mono}} + g^{\mathrm{bino}} F_{\mathrm{bino}} + \tilde{F}$$

is minimised, which is defined as the sum of at least one first monocular function $F^{(1)}_{\mathrm{mono}}$ and a binocular function $F_{\mathrm{bino}}$ with respective weighting factors $g^{(1)}$ or $g^{\mathrm{bino}}$, the first monocular function $F^{(1)}_{\mathrm{mono}}$ depending upon the values of at least one first monocular optical property $Mon^{(m1)}$ at a large number of evaluation points $i_1$ of the first spectacle lens, the binocular function $F_{\mathrm{bino}}$ for a large number of pairs $(i^b_1, i^b_2)$ of respectively one binocular evaluation point $i^b_1$ of the first spectacle lens and of a binocular evaluation point $i^b_2$, corresponding thereto in the specific situation of use, of the second spectacle lens depending upon the values of a second monocular optical property $Mon^{(b)}$ both at the binocular evaluation point $i^b_1$ of the first spectacle lens and at the binocular evaluation point $i^b_2$ of the second spectacle lens, the second monocular optical property $Mon^{(b)}$ comprising a non-prismatic optical property, and the residual term $F\!\sim$ not depending upon the values of the first monocular optical property at the evaluation points of the first spectacle lens,

the binocular calculating or optimising step being effected such that, in the target function according to

$$F = g^{(1)} F^{(1)}_{\mathrm{mono}} + g^{(2)} F^{(2)}_{\mathrm{mono}} + g^{\mathrm{bino}} F_{\mathrm{bino}}$$

as further summand, a second monocular function $F^{(2)}_{\mathrm{mono}}$ with a weighting factor $g^{(2)}$ is taken into account which depends upon the values of at least one third monocular optical property $Mon^{(m2)}$ at a large number of evaluation points $i_2$ of the second spectacle lens.

**Revendications**

1. Procédé d'optimisation et de fabrication d'au moins un premier verre de lunettes pour une paire de verres de lunettes, à utiliser conjointement à un deuxième verre d'une paire de lunettes pour une situation d'utilisation donnée, comprenant une étape de calcul ou d'optimisation binoculaire d'au moins une surface du premier verre de lunettes de manière à minimiser une fonction de destination

$$F = g^{(1)}F_{\text{mono}}^{(1)} + g^{\text{bino}}F_{\text{bino}} + \tilde{F}$$

définie comme étant la somme d'au moins une première fonction monoculaire $F_{mono}^{(1)}$ et d'une fonction binoculaire $F_{\text{bino}}$ avec des facteurs de pondération $g^{(1)}$, $g^{bino}$ respectifs et avec un terme résiduel $\tilde{F}$, où la première fonction monoculaire $F_{mono}^{(1)}$ dépend des valeurs d'au moins une première propriété optique monoculaire $Mon^{(m1)}$ en une pluralité de points d'évaluation $i_1$ du premier verre de lunettes, où, pour une pluralité de paires $\left(i_1^b, i_2^b\right)$ constituées chacune d'un point d'évaluation binoculaire $i_1^b$ du premier verre de lunettes et d'un point d'évaluation binoculaire $i_2^b$ du deuxième verre de lunettes correspondant au premier point dans la situation d'utilisation donnée, la fonction binoculaire $F_{\text{bino}}$ dépend des valeurs d'une deuxième propriété optique monoculaire $Mon^{(b)}$, tant au point d'évaluation binoculaire $i_1^b$ du premier verre de lunettes qu'au point d'évaluation binoculaire $i_2^b$ du deuxième verre de lunettes, où la deuxième propriété optique monoculaire $Mon^{(b)}$ comprend une propriété optique non prismatique, et où le terme résiduel $\tilde{F}$ ne dépend pas des valeurs de la première propriété optique monoculaire aux points d'évaluation du premier verre de lunettes,
où l'étape de calcul ou d'optimisation binoculaire est exécutée de telle manière qu'une deuxième fonction monoculaire $F_{mono}^{(2)}$ avec un facteur de pondération $g^{(2)}$ est prise en compte en tant qu'autre opérande dans la fonction de destination suivante

$$F = g^{(1)}F_{\text{mono}}^{(1)} + g^{(2)}F_{\text{mono}}^{(2)} + g^{\text{bino}}F_{\text{bino}}$$

laquelle dépend des valeurs d'au moins une troisième propriété optique monoculaire $Mon^{(m2)}$ en une pluralité de points d'évaluation $i_2$ du deuxième verre de lunettes.

2. Procédé selon la revendication 1, où l'étape de calcul ou d'optimisation binoculaire est exécutée de telle manière que ladite au moins une propriété optique monoculaire prise en compte dans la première et/ou la deuxième fonction monoculaire comprend l'équivalent sphérique $Mon^{(1)} = S_\Delta$ et/ou la valeur du cylindre $Mon^{(2)} = Z_\Delta$ du déficit de réfraction du premier ou du deuxième verre de lunettes.

3. Procédé selon l'une des revendications précédentes, où l'étape de calcul ou d'optimisation binoculaire est exécutée de telle manière que la fonction binoculaire $F_{\text{bino}}$ dépend, pour chaque paire $\left(i_1^b, i_2^b\right)$ de points d'évaluation binoculaires, de la différence

$$Mon^{(b)}\left(i_1^b\right) - Mon^{(b)}\left(i_2^b\right)$$

entre la valeur de la deuxième propriété optique monoculaire $Mon^{(b)}$ au point d'évaluation binoculaire $i_1^b$ du premier verre de lunettes et la valeur de la deuxième propriété optique monoculaire $Mon^{(b)}$ au point d'évaluation binoculaire $i_2^b$ correspondant au premier point du deuxième verre de lunettes.

**4.** Procédé selon l'une des revendications précédentes, où l'étape de calcul ou d'optimisation binoculaire est exécutée de manière à prendre en compte, dans la première et/ou la deuxième fonction monoculaire suivante

$$F_{mono}^{(s)} = \sum_m \sum_{i_s} g_s^{(m)}(i_s) \left( Mon^{(m)}(i_s) - Mon_{Soll}^{(m)}(i_s) \right)^2 ,$$

des écarts des valeurs d'au moins une propriété optique monoculaire $Mon^{(m)}$ par rapport aux valeurs de consigne $\tilde{Mon}_{s,Soll}^{(m)}$ correspondantes aux points d'évaluation $i_s$ du premier ($s=1$) ou du deuxième ($s=2$) verre de lunettes avec des facteurs de pondération $g_s^{(m)}(i_s)$ respectifs, et à prendre en compte dans la fonction binoculaire suivante

$$F_{bino} = \sum_k \sum_i g_{bin}^{(k)}(i) \left( Bin^{(k)}(i) - Bin_{Soll}^{(k)}(i) \right)^2 ,$$

des écarts des valeurs d'au moins une propriété optique binoculaire $Bin^{(k)}$ de valeurs de consigne $\overline{Bin_{Soll}^{(k)}}$ correspondantes aux points d'évaluation $i$ du premier verre de lunettes avec des facteurs de pondération $\overline{g_{bin}^{(k)}(i)}$ respectifs, où la sommation sur les points d'évaluation $i$ est effectuée au moins sur les points d'évaluation binoculaires $i_1^b$ du premier verre de lunettes et où, pour chaque point d'évaluation binoculaire $i_1^b$ du premier verre de lunettes, ladite au moins une propriété optique binoculaire $Bin^{(k)}$ dépend tant de la valeur de ladite au moins une deuxième propriété optique monoculaire $Mon^{(b)}$ au point d'évaluation binoculaire $i_1^b$ du premier verre de lunettes que de la valeur de ladite au moins une deuxième propriété optique monoculaire $Mon^{(b)}$ au point d'évaluation binoculaire $i_2^b$ correspondant au premier point du deuxième verre de lunettes.

**5.** Procédé selon la revendication 4, comprenant en outre :

- la détermination d'une pluralité de premiers points d'évaluation monoculaires $i_1^m$ en tant que points d'évaluation $i_1$ du premier verre de lunettes, pour lesquels n'existe aucun point d'évaluation correspondant du deuxième verre de lunettes dans la situation d'utilisation donnée, et

- l'association à chaque premier point d'évaluation monoculaire $i_1^r$ d'un point d'évaluation $i_2$ du deuxième verre de lunettes en tant que deuxième point de référence monoculaire

l'étape de calcul ou d'optimisation binoculaire étant exécutée de telle manière que la sommation sur les points d'évaluation $i$ de la fonction binoculaire $F_{bino}$ est effectuée sur tous les points d'évaluation $i_1$ du premier verre de lunettes, et ladite au moins une propriété optique binoculaire $Bin^{(k)}$ pour chaque premier point d'évaluation monoculaire $i_1^m$ du premier verre de lunettes dépendant tant de la valeur de ladite au moins une deuxième propriété optique monoculaire $Mon^{(b)}$ au premier point d'évaluation monoculaire $i_1^m$ du premier verre de lunettes que de la valeur de ladite au moins une deuxième propriété optique monoculaire $Mon^{(b)}$ au deuxième point de référence monoculaire $i_2^r$ du deuxième verre de lunettes associé audit premier point d'évaluation monoculaire $i_1^m$,

le procédé comprenant en outre :

- la détermination d'une pluralité de deuxièmes points d'évaluation monoculaires $i_2^m$ en tant que points d'évaluation $i_2$ du deuxième verre de lunettes, pour lesquels n'existe aucun point d'évaluation du premier verre de lunettes dans la situation d'utilisation donnée, et

- l'association à chaque deuxième point d'évaluation monoculaire $i_2^m$ d'un point d'évaluation $i_1$ du premier

verre de lunettes en tant que premier point de référence monoculaire $i_1^r$,

l'étape de calcul ou d'optimisation binoculaire étant exécutée de telle manière que la sommation sur les points d'évaluation $i$ de la fonction binoculaire $F_{\mathbf{bino}}$ est en outre effectuée sur les deuxièmes points d'évaluation monoculaires, et ladite au moins une propriété optique binoculaire $\mathbf{Bin}^{(k)}$ pour chaque deuxième point d'évaluation monoculaire $i_2^m$ du deuxième verre de lunettes dépendant tant de la valeur de ladite au moins une deuxième propriété optique monoculaire $\mathbf{Mon}^{(b)}$ au deuxième point d'évaluation monoculaire $i_2^m$ du deuxième verre de lunettes que de la valeur de ladite au moins une deuxième propriété optique monoculaire $\mathbf{Mon}^{(b)}$ au premier point de référence monoculaire $i_1^r$ du premier verre de lunettes associé audit deuxième point d'évaluation monoculaire $i_2^m$.

6. Procédé selon la revendication 5, où à chaque point d'évaluation monoculaire $i^m$ du premier verre de lunettes est associé en tant que point de référence monoculaire $i^r$ correspondant le point d'évaluation de l'autre verre de lunettes qui lui est horizontalement symétrique dans la situation d'utilisation donnée.

7. Procédé selon l'une des revendications précédentes, comprenant avant l'étape de calcul ou d'optimisation binoculaire une première et/ou une deuxième étape de calcul ou d'optimisation monoculaire de manière à minimiser la première fonction monoculaire $F_{mono}^{(1)}$ ou la deuxième fonction monoculaire $F_{mono}^{(2)}$.

8. Procédé selon l'une des revendications précédentes, comprenant en outre une étape de détermination d'un oeil dominant, où le verre de la paire de verres de lunettes correspondant à l'oeil dominant est défini en tant que deuxième verre de lunettes.

9. Procédé selon l'une des revendications précédentes, où l'étape de calcul ou d'optimisation binoculaire comprend une première étape de variation unilatérale de manière à minimiser la fonction de destination $F$ par variation de ladite au moins une surface du premier verre de lunettes, alors que le deuxième verre de lunettes reste inchangé.

10. Procédé selon la revendication 9, où l'étape de calcul ou d'optimisation binoculaire comprend en outre une deuxième étape de variation unilatérale de manière à minimiser la fonction de destination $F$ par variation d'au moins une surface du deuxième verre de lunettes, alors que le premier verre de lunettes reste inchangé.

11. Procédé selon la revendication 10, où l'étape de calcul ou d'optimisation binoculaire est exécutée de telle manière que la première et la deuxième étape de variation unilatérale sont exécutées plusieurs fois successivement en alternance.

12. Produit-programme informatique comprenant des parties de programme conçues pour exécuter, par chargement et exécution sur un ordinateur, un procédé d'optimisation d'au moins un premier verre de lunettes pour une paire de verres de lunettes, à utiliser conjointement à un deuxième verre d'une paire de lunettes pour une situation d'utilisation donnée, ledit procédé d'optimisation d'au moins un premier verre de lunettes pour une paire de verres de lunettes comprenant une étape de calcul ou d'optimisation binoculaire d'au moins une surface du premier verre de lunettes de manière à minimiser une fonction de destination

$$F = g^{(1)} F_{\mathrm{mono}}^{(1)} + g^{\mathrm{bino}} F_{\mathrm{bino}} + \widetilde{F}$$

définie comme étant la somme d'au moins une première fonction monoculaire $F_{mono}^{(1)}$ et d'une fonction binoculaire $F_{\mathbf{bino}}$ avec des facteurs de pondération $g^{(1)}$, $g^{bino}$ respectifs, où la première fonction monoculaire $F_{mono}^{(1)}$ dépend des valeurs d'au moins une première propriété optique monoculaire $\mathbf{Mon}^{(m1)}$ en une pluralité de points d'évaluation $i_1$ du premier verre de lunettes, où, pour une pluralité de paires $\left(i_1^b, i_2^b\right)$ constituées chacune d'un point d'évaluation binoculaire $i_1^b$ du premier verre de lunettes et d'un point d'évaluation binoculaire $i_2^b$ du deuxième verre de lunettes correspondant au premier point dans la situation d'utilisation donnée, la fonction binoculaire $F_{\text{bino}}$ dépend des valeurs d'une deuxième propriété optique monoculaire $Mon^{(b)}$, tant au point d'évaluation binoculaire $i_1^b$ du premier verre de lunettes qu'au point d'évaluation binoculaire $i_2^b$ du deuxième verre de lunettes, où la deuxième propriété optique monoculaire $Mon^{(b)}$ comprend une propriété optique non prismatique, et où le terme résiduel $\tilde{F}$ ne dépend pas des valeurs de la première propriété optique monoculaire aux points d'évaluation du premier verre de lunettes, où l'étape de calcul ou d'optimisation binoculaire est exécutée de telle manière qu'une deuxième fonction monoculaire $F_{mono}^{(2)}$ avec un facteur de pondération $g^{(2)}$ est prise en compte en tant qu'autre opérande dans la fonction de destination suivante

$$F = g^{(1)} F_{\text{mono}}^{(1)} + g^{(2)} F_{\text{mono}}^{(2)} + g^{\text{bino}} F_{\text{bino}}$$

laquelle dépend des valeurs d'au moins une troisième propriété optique monoculaire $Mon^{(m2)}$ en une pluralité de points d'évaluation $i_2$ du deuxième verre de lunettes.

**13.** Support de stockage sur lequel est mémorisé un programme informatique, où ledit programme informatique est conçu pour exécuter, par chargement et exécution sur un ordinateur, un procédé d'optimisation d'au moins un premier verre de lunettes pour une paire de verres de lunettes, à utiliser conjointement à un deuxième verre d'une paire de lunettes pour une situation d'utilisation donnée, ledit procédé d'optimisation d'au moins un premier verre de lunettes pour une paire de verres de lunettes comprenant une étape de calcul ou d'optimisation binoculaire d'au moins une surface du premier verre de lunettes de manière à minimiser une fonction de destination

$$F = g^{(1)} F_{\text{mono}}^{(1)} + g^{\text{bino}} F_{\text{bino}} + \tilde{F}$$

définie comme étant la somme d'au moins une première fonction monoculaire $F_{mono}^{(1)}$ et d'une fonction binoculaire $F_{\text{bino}}$ avec des facteurs de pondération $g^{(1)}$, $g^{bino}$ respectifs, où la première fonction monoculaire $F_{mono}^{(1)}$ dépend des valeurs d'au moins une première propriété optique monoculaire $Mon^{(m1)}$ en une pluralité de points d'évaluation $i_1$ du premier verre de lunettes, où, pour une pluralité de paires $\left(i_1^b, i_2^b\right)$ constituées chacune d'un point d'évaluation binoculaire $i_1^b$ du premier verre de lunettes et d'un point d'évaluation binoculaire $i_2^b$ du deuxième verre de lunettes correspondant au premier point dans la situation d'utilisation donnée, la fonction binoculaire $F_{\text{bino}}$ dépend des valeurs d'une deuxième propriété optique monoculaire $Mon^{(b)}$, tant au point d'évaluation binoculaire $i_1^b$ du premier verre de lunettes qu'au point d'évaluation binoculaire $i_2^b$ du deuxième verre de lunettes, où la deuxième propriété optique monoculaire $Mon^{(b)}$ comprend une propriété optique non prismatique, et où le terme résiduel $\tilde{F}$ ne dépend pas des valeurs de la première propriété optique monoculaire aux points d'évaluation du premier verre de lunettes, où l'étape de calcul ou d'optimisation binoculaire est exécutée de telle manière qu'une deuxième fonction monoculaire $F_{mono}^{(2)}$ avec un facteur de pondération $g^{(2)}$ est prise en compte en tant qu'autre opérande dans la fonction de destination suivante

$$F = g^{(1)} F_{\text{mono}}^{(1)} + g^{(2)} F_{\text{mono}}^{(2)} + g^{\text{bino}} F_{\text{bino}}$$

laquelle dépend des valeurs d'au moins une troisième propriété optique monoculaire $Mon^{(m2)}$ en une pluralité de points d'évaluation $i_2$ du deuxième verre de lunettes.

**14.** Dispositif pour la fabrication d'un verre de lunettes, ledit dispositif comprenant :

34

- un moyen de saisie pour la saisie de données de destination d'un verre de lunettes ;
- un moyen de calcul et d'optimisation pour le calcul et l'optimisation d'au moins un premier verre de lunettes pour une paire de verres de lunettes, à utiliser conjointement à un deuxième verre d'une paire de lunettes pour une situation d'utilisation donnée, le calcul et l'optimisation de ladite au moins une surface du premier verre de lunettes comprenant une étape de calcul ou d'optimisation binoculaire, exécutée de manière à minimiser une fonction de destination

$$F = g^{(1)} F^{(1)}_{\text{mono}} + g^{\text{bino}} F_{\text{bino}} + \tilde{F}$$

définie comme étant la somme d'au moins une première fonction monoculaire $F^{(1)}_{mono}$ et d'une fonction binoculaire $F_{\text{bino}}$ avec des facteurs de pondération $g^{(1)}$, $g^{bino}$ respectifs, où la première fonction monoculaire $F^{(1)}_{mono}$ dépend des valeurs d'au moins une première propriété optique monoculaire $Mon^{(m1)}$ en une pluralité de points d'évaluation $i_1$ du premier verre de lunettes, où, pour une pluralité de paires $\left(i_1^b, i_2^b\right)$ constituées chacune d'un point d'évaluation binoculaire $i_1^b$ du premier verre de lunettes et d'un point d'évaluation binoculaire $i_2^b$ du deuxième verre de lunettes correspondant au premier point dans la situation d'utilisation donnée, la fonction binoculaire $F_{\text{bino}}$ dépend des valeurs d'une deuxième propriété optique monoculaire $Mon^{(b)}$, tant au point d'évaluation binoculaire $i_1^b$ du premier verre de lunettes qu'au point d'évaluation binoculaire $i_2^b$ du deuxième verre de lunettes, où la deuxième propriété optique monoculaire $Mon^{(b)}$ comprend une propriété optique non prismatique, et où le terme résiduel $\tilde{F}$ ne dépend pas des valeurs de la première propriété optique monoculaire aux points d'évaluation du premier verre de lunettes, où l'étape de calcul ou d'optimisation binoculaire est exécutée de telle manière qu'une deuxième fonction monoculaire $F^{(2)}_{mono}$ avec un facteur de pondération $g^{(2)}$ est prise en compte en tant qu'autre opérande dans la fonction de destination suivante

$$F = g^{(1)} F^{(1)}_{\text{mono}} + g^{(2)} F^{(2)}_{\text{mono}} + g^{\text{bino}} F_{\text{bino}}$$

laquelle dépend des valeurs d'au moins une troisième propriété optique monoculaire $Mon^{(m2)}$ en une pluralité de points d'évaluation du deuxième verre de lunettes.

Fig 1A

Fig 1B

EP 2 227 713 B1

Fig 2A

Fig 2B

Fig 3B

Refraktionsgleichgewicht

Fig 3A

Refraktionsgleichgewicht

EP 2 227 713 B1

Fig 4

100

50

110

120

200

101

130

180

300

140

150

170

102

160

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005057533 A1
- WO 2004086125 A1
- WO 0184213 A2
- US 20030117578 A

**In der Beschreibung aufgeführte Nicht-Patentliteratur**

- **HEINZ DIEPES.** Refraktionsbestimmung. DOZ Verlag, 2004, 74-75
- **LAN P. HOWARD ; BRIAN J. ROGERS.** Binokular Vision and Stereopsis. Oxford University Press, 1995, 38-39, 560